# EUROPEAN PATENT SPECIFICATION

(11) **EP 1 531 672 B1**
(45) Date of publication and mention of the grant of the patent: **01.06.2011**
(21) Application number: 03749300.4
(22) Date of filing: 29.08.2003
(51) Int. Cl.: A01N 37/36, A01N 37/44, A01N 59/26, A23K 1/16

(54) **ANTIMICROBIAL COMPOSITIONS**
ANTIMIKROBIELLE ZUSAMMENSETZUNGEN
COMPOSITIONS ANTIMICROBIENNES

(30) Priority: 30.08.2002 US 407050 P; 21.01.2003 US 441384 P; 21.01.2003 US 441584 P; 21.03.2003 US 456673 P; 21.03.2003 US 456732 P; 25.04.2003 US 465549 P
(43) Date of publication of application: 25.05.2005
(73) Proprietor: Novus International, Inc., St. Louis, MO 63141 (US)
(72) Inventor: SCHASTEEN, Charles S., Novus International, Inc., St. Louis, MO 63141 (US); WU, Jennifer, Novus International, Inc., St. Louis, MO 63141 (US); BUTTIN, Pierre, Novus International, Inc., St. Louis, MO 63141 (US); HILLEBRAND, Pieter, Novus International, Inc., St. Louis, MO 63141 (US); SCOTT, Fredrick R., Novus International, Inc., St. Louis, MO 63141 (US); VASQUEZ-ANON, Mercedes, Novus International, Inc., St. Louis, MO 63141 (US)
(74) Representative: Evans, Jacqueline Gail Victoria
(86) International application number: PCT/US2003/027323
(87) International publication number: WO 2004/019683

(56) References cited:
- EP-A- 0 937 706
- EP-A- 1 062 879
- EP-A- 1 205 115
- WO-A-00/59877
- WO-A-96/35337
- WO-A-99/04646
- WO-A-03/037103
- WO-A-03/084346
- FR-A- 2 795 919
- US-A- 5 795 602
- US-A- 5 985 336
- US-A- 6 008 409
- US-A1- 2003 077 254
- DATABASE WPI Section Ch, Week 200225 Derwent Publications Ltd., London, GB; Class D13, AN 1995-127290 XP002264287 & JP 03 270588 B (SANEIGEN FFI KK), 2 April 2002 (2002-04-02)
- DATABASE CA [Online] CHEMICAL ABSTRACTS SERVICE, COLUMBUS, OHIO, US; OZER, BARBAROS ET AL: "Effect of addition of amino acids, treatment with.beta.-galactosidase an use of heat-shocked cultures on the acetaldehyde level in yoghurt" retrieved from STN Database accession no. 138:254071 XP002264285 & INTERNATIONAL JOURNAL OF DAIRY TECHNOLOGY (2002), 55(4), 166-170 ,
- DATABASE CA [Online] CHEMICAL ABSTRACTS SERVICE, COLUMBUS, OHIO, US; LAMIKANRA, O. ET AL: "Biochemical and Microbial Changes during the Storage of Minimally Processed Cantaloupe" retrieved from STN Database accession no. 134:55755 XP002264286 & JOURNAL OF AGRICULTURAL AND FOOD CHEMISTRY (2000), 48(12), 5955-5961 ,
- DATABASE WPI Section Ch, Week 200060 Derwent Publications Ltd., London, GB; Class D13, AN 2000-321535 XP002264288 & JP 03 107789 B (QP CORP), 13 November 2000 (2000-11-13)
- DATABASE CA [Online] CHEMICAL ABSTRACTS SERVICE, COLUMBUS, OHIO, US; ROBINSON ET AL.: "Influence of abomasal infusion of high levels of lysine or methionine, or both, on ruminal fermentation, eating behaviour and performance of lactating dairy cows" retrieved from STN Database accession no. 133:119617 XP002271414 & JOURNAL OF ANIMAL SCIENCE, vol. 78, no. 4, 2000, pages 1067-1077,
- DATABASE WPI Section Ch, Week 199909 Derwent Publications Ltd., London, GB; Class D13, AN 1999-098974 XP002271418 & JP 10 327751 A (SNOW BRAND MILK PROD CO LTD), 15 December 1998 (1998-12-15)
- DATABASE WPI Section Ch, Week 199627 Derwent Publications Ltd., London, GB; Class D13, AN 1996-262572 XP002271419 & JP 08 107757 A (AJINOMOTO KK), 30 April 1996 (1996-04-30)
- DATABASE CA [Online] CHEMICAL ABSTRACTS SERVICE, COLUMBUS, OHIO, US; MARTIN, F. L. ET AL. : "The effect of tuber composition on potato crisp flavour" retrieved from STN Database accession no. 136:69008 XP002271415 & SCHIEBERLE, P; ENGEL, K.H.: "Frontiers of Flavour Science" , DEUTSCHE FORSCHUNGSANSTALT FÜR LEBENSMITTELCHEMIE , GARCHING, GERMANY
- DATABASE CA [Online] CHEMICAL ABSTRACTS SERVICE, COLUMBUS, OHIO, US; SMIT, G. ET AL.: "Flavour formation by enzymatic conversion of amino acids" retrieved from STN Database accession no. 136:84940 XP002271416 & SCHIEBERLE, P.; ENGEL, K.H.: "Frontiers of Flavour Science" , DEUTSCHE FORSCHUNGSANSTALT FÜR LEBENSMITTELCHEMIE , GARCHING, GERMANY
- DATABASE CA [Online] CHEMICAL ABSTRACTS SERVICE, COLUMBUS, OHIO, US; CHA, YONG-JUN ET AL.: "Identification of aroma-active compounds in Korean salt-fermented fishes by aroma extract dilution analysis. 1. Aroma-active components in salt-fermented anchovy on the market" retrieved from STN Database accession no. 131:157031 XP002271417 & KOREAN SOCIETY OF FOOD SCIENCE AND NUTRITION, vol. 28, no. 2, 1999, pages 312-318,

## Description

### FIELD OF THE INVENTION

The present invention generally relates to the provision of an antimicrobial composition and of methods of controlling the growth of, preventing the growth of, or killing, microbial organisms. In particular, the invention relates to an antimicrobial composition comprising 2-hydroxy-4-(methylthio) butanoic acid and two other organic acids selected from butyric, lactic, formic and propionic acids, its preparation and its use inhibiting or killing salmonella in food.

### BACKGROUND OF THE INVENTION

Control of bacteria in animal feed is an ongoing challenge for the industry, even more so as consumers focus on the health and safety of the meat they feed their families. Control of bacteria is desirable to protect the health of the animal for which the feed is intended. Gut bacteria in the animal compete for nutrients and can be detrimental to the health and performance of the animal. Second, and of growing importance, the reduction of bacteria in feed is an important part in the reduction and control of food borne diseases.

The use of antibiotics in animal feed has recently come under scrutiny, in part due to concerns that overuse of antibiotics may result in resistance to the antibiotics in the animals treated. Additionally, upon consumption of animals treated with antibiotics, humans may experience problems due to allergies to the antibiotics, or in becoming resistant to the antibiotics as well. Thus, a need exists for alternative means of inhibiting bacteria in animal feed.

Two main alternatives are currently available for control of bacteria in feed: thermal and chemical methods. Heat treatment of feed is costly, but efficient. However, heat treatment alone does not avoid recontamination of the feed between the time the feed is treated and consumed by the animal.

Chemical treatments primarily involve the use of formaldehyde or an organic acid to the feed. Formaldehyde has been used extensively in the UK, although its use remains under scrutiny by the EU Commission.

Organic acids, on the other hand, have many applications in the animal feed industry worldwide. For many years, nutritionists have used organic acids in piglet diets for their positive effect on health and growth. For instance, formic acid is used to decontaminate raw materials, and propionic acid is used to control mold. Other organic acids commonly used include fumaric, citric and lactic acids. Organic acids are also known to modify the gastrointestinal flora.

Approvals for the use of non-therapeutic antibiotics in animal feed have been withdrawn in several countries and the practice of feeding low-dose growth promoters is fast disappearing worldwide. Already, producers who want to sell in the drug-free market are searching for non-pharmaceutical replacements for feed antibiotics. Most data suggest that the growth-promoting effect of antibiotics can be entirely ascribed to their antimicrobial activity and the physiological repercussions from that. Thus, the search for replacements has focused on naturally occurring molecules with known anti-microbial activity.

The primary effect of antibiotics is antimicrobial; all of the digestibility and performance effects can by explained by their impact on the gastrointestinal microflora and the resulting reduction in immune stimulation. Organic acids have antimicrobial activity; however, there appear to be effects of organic acids beyond those attributed to antimicrobial activity. Reductions in certain species of bacteria are associated with feeding organic acids, which are particularly effective against acid intolerant species like *E*. *coli, Salmonella* and *Campylobacter.* Both antibiotics and organic acids improve protein and energy digestibility by lowering the incidence of background immune stimulation and the resulting synthesis and secretion of immune mediators, by reducing production of ammonia and other growth-depressing microbial metabolites and perhaps by reducing the overall microbial load. Unlike antibiotics, the antimicrobial activity of organic acids is pH dependent. Organic acids have a clear and significant benefit in weanling piglets, and have been observed to benefit poultry performance. Organic acids have several additional effects that go beyond those of antibiotics. These include reduction in digesta pH and increased pancreatic secretion.

Pigs are susceptible to weaning stresses (separation from sows, environmental changes, and physical effects of solid feed) and a variety of pathogens such as *E. coli* and *rotavirus*. These pathogens are reduced in adult animals by the reduction of pH in the stomach, but young pigs have lower hydrochloric acid secretion from the stomach. In addition, the failure to acidify gastric contents coupled with low pancreatic enzyme secretion can lead to insufficient nutrient digestion and also increase the susceptibility of weaning pigs to enteric diseases.

A number of studies have documented the effects of organic acids on performance in young swine, particularly early weaned piglets. A recent publication by Partanen ("Organic acids: their efficacy and modes of action in pigs," in Gut Environment of Pigs, p. 201, Piva, A. et al., eds, Nottingham University Press, Nottingham, UK (2001)) reviews the literature in this area and provides the results of a meta-analysis of existing data. Only studies using individual acids in the absence of antibiotics and copper are considered. In the analysis of 46 weaned piglet and 23 fattening pig trials, significant feed-to-gain improvements were seen with formic, fumaric, and citric acids and also with calcium diformate. Weight gain and feed intake effects were significant for formic acid and diformate. The author concludes that dietary acids have a beneficial effect, especially on weaned piglets, that is primarily associated with changes in the gastrointestinal microflora. See Eidelsburger et al., J. Anim. Physiol. Anim. Nutr. 68: 82-92 (1992).

Without being limited to a particular theory, it is believed that one mechanism for the action of organic acids as antimicrobials is as follows. The acid changes the microbial populations in accordance with its antimicrobial spectrum of activity. Once inside the cell, the change in pH causes the dissociation of these weak acids. The multiple effects of organic acids are due to this intracellular dissociation and the cellular response to it. The antimicrobial activity is a result of the deleterious effects of the free proton and, perhaps, the free anion on the bacterial or fungal cell. In the gut enterocytes, the dissociation is thought to result in the synthesis of secretin, a hormone that stimulates pancreatic secretion. Thus, organic acids have benefits that go beyond antimicrobial activity. For feeds, the activity to control fungal growth dominates, while in the gut, the populations being affected are primarily the bacteria whose growth is most affected by acidic conditions. It should be emphasized, however, that the mechanism of action of organic acids is quite different from, and in addition to, that of inorganic acids such as HCl. See, e.g., Eidelsburger et al., supra. The importance of low pH on the antimicrobial activity of organic acids can be explained by its effect on the dissociation of the acid. At low pH, more of the organic acid will be in the undissociated form. Undissociated organic acids are lipophilic and can diffuse across cell membranes, including those of bacteria and molds. See Huyghebaert, Report: CLO-DVV (1999)and Eidelsburger et al., supra. Once in the bacterial cell, the higher pH of its cytoplasm causes dissociation of the acid, and the resulting reduction in pH of the cell contents will have the effects of disruption of enzymatic reactions and nutrient transport systems. See Cherrington et al., Adv. Microb. Physio., 32:87-108 (1991). In addition, the process of transporting the free proton out of the cell is energy requiring and this contributes to reduced energy availability for proliferation, resulting in some degree of bacteriostasis. This direct antimicrobial activity is believed to be responsible for feed and food sanitation effects that contribute to the use of organic acids as preservatives.

Most food production animals, especially pigs, poultry and cattle, require supplemental methionine in their diets for proper growth and reproduction. 2-hydroxy-4-(methylthio)butanoic acid (HMBA, sold under the trade name Alimet^{®} by Novus International, Inc. (St. Louis, Missouri)) is a popular source of supplemental methionine for animal diets. Alimet^{®} has become a preferred source over powder d,1-methionine (DLM), for feed mills wanting to solve the common problems associated with increased production capacity because of the efficiency advantages of the physical form of liquids. Easier bulk handling, accurate dosage, elimination of packaging with its disposal and the inventory shrink issues, as well as dust reduction, are popular features. Alimet^{®} contains 88% methionine activity, while liquid DLM contains only 40% methionine activity. This low level of relative activity in DLM means water takes the place of valuable energy and protein components in the feed, reducing nutrient density.

Preventing or delaying the growth of mold in animal feed compositions is beneficial, in that less feed is lost to spoilage, and illnesses associated with the molds or toxins they produce can be avoided.

Mold in feed rations can render the feed unfit for consumption. Moldy feed may decrease the digestibility and/or palatability of the feed, both of which can adversely affect production and health of the animal. Additionally, many molds produce mycotoxins which affect the nutrient value of feed, or which may be hazardous to the health of animals, including livestock and humans. *Aspergillus aflatoxin B₁* mycotoxin is a potent liver carcinogen; certain *Penicillium* mycotoxins affect liver or kidney function; and *Fusarium* mold species are associated with pulmonary edema in swine, liver cancer in rats, and abnormal bone development in chicks and pigs. United States Department of Agriculture, "Grain Fungal Diseases & Mycotoxin Reference," available at http://www.usda.gov/gipsa/pubs/pubs.htm. Pigs are particularly sensitive to the presence of *Fusarium* mycotoxins, especially *deoxynivalenol* (DON), also known as vomitoxin.

Detoxifying feed which has been contaminated with mycotoxins can be quite difficult, and often is accomplished only by subjecting the feed to extreme processing conditions. For example, corn contaminated with aflatoxin, a mycotoxin produced by the *Aspergillus* species of mold, can be detoxified by treating the corn under pressure with hot, moist ammonia. Thus, the need exists for a way to prevent formation of mold and the mycotoxins they may produce.

Mold growth in untreated, stored feeds is especially prevalent in hot, humid conditions. Higher temperatures increase the chance for mold growth, particularly when coupled with high moisture levels in the feed. In chicken feed, mold growth rarely occurs in grains containing less than 14-15% moisture. However, even feeds with a low average moisture level may have pockets with high moisture levels, producing microclimates ideal for mold growth. This often happens in warmer climates, especially where cool night time temperatures cause condensation inside silos or bins where grains or feed is stored. Even these relatively small pockets of mold growth can be problematic; mycotoxins can be problematic to birds at parts-per-million levels (e.g., tricothecenes, produced by the *Fusarium* species, and aflatoxins, produced by the *Aspergillus* species).

It is known that certain feed additives prevent mold growth (i.e., act as antifungals) or bind existing mycotoxins. Such additives are often used where moisture control in grain or mixed feed is logistically difficult. The use of certain organic acids, including propionic and acetic acid, as mold inhibitors is known. Adsorbents to bind mycotoxins include aluminosilicates and clay loam products, whose chemical structure allow the capture of aflatoxin, and perhaps other mycotoxins. Mycotoxin adsorbents have variable efficacy, due in part to their variable binding characteristics. Use of a separate mold inhibitor or mold adsorbent increases the costs associated with animal feed.

A previous study (Doerr et al., Poultry Science, 74(1), 23 (1995)) suggested that Alimet^{®} may reduce the growth of mold in samples of Sabouraud's dextrose broth, potato dextrose agar, or ground corn (19% moisture) treated with either *Aspergillus parasiticus, Aspergillus ochraceus*, or *Fusarium moniliforme*, and in ground corn (17.5% moisture) with its naturally occurring fungal flora.

Enhancing the palatability of animal food is an endless endeavor by food manufacturers. Addition of palatants to the food is desirable as a means to increase acceptance by the animals, resulting in improved health of the animal, increased weight gain, etc. Palatants are frequently used in foods for canines, felines, and aquaculture.

### SUMMARY OF THE INVENTION

The present invention provides an antimicrobial composition comprising 2-hydroxy-4-(methylthio) butanoic acid and two other organic acids selected from butyric acid, lactic acid, formic acid and propionic acid.

In another aspect, the present invention provides a method for preparing an antimicrobial composition comprising blending 2-hydroxy-4-(methylthio)butanoic acid C hereinafter referred to as the compound of formula (I) with two other organic acids selected from butyric acid, lactic acid, formic acid and propionic acid.

The invention also provides the use of an antimicrobial composition as defined above for inhibiting or killing salmonella in food.

### BRIEF DESCRIPTION OF THE DRAWINGS

**Figure 1A** is a graph illustrating the effect of varying doses (0.108, 0.3, and 0.83 g/L) of formic acid and Alimet^{®} at pH 4.5 and 6.75 on the number of colony forming units of *S. enteritidis* after 4 hours.

**Figure 1B** is a graph illustrating the effect of varying doses (0.108, 0.3, and 0.83 g/L) of formic acid and Alimet^{®} at pH 4.5 and 6.75 on the number of colony forming units of *E. coli* after 4 hours.

**Figure 1C** is a graph illustrating the effect of varying doses (0.108, 0.3, and 0.83 g/L) of formic acid and Alimet^{®} at pH 4.5 and 6.75 on the number of colony forming units of *L. plantarum* after 6 hours.

**Figure 1D** is a graph illustrating the effect of varying doses (0.108, 0.3, and 0.83 g/L) of formic acid and Alimet^{®} at pH 4.5 and 6.75 on the number of colony forming units of *C. jejuni* after 6 hours.

**Figure 2A** is a graph illustrating the pH-dependent antibacterial effect of formic acid and Alimet^{®} on the number of colony forming units of *S*. *enteritidis.*

**Figure 2B** is a graph illustrating the pH-dependent antibacterial effect of formic acid and Alimet^{®} on the number of colony forming units of *E. coli.*

**Figure 2C** is a graph illustrating the pH-dependent antibacterial effect of formic acid and Alimet^{®} on the number of colony forming units of *L. plantarum*.

**Figure 2D** is a graph illustrating the pH-dependent antibacterial effect of formic acid and Alimet^{®} on the number of colony forming units of *C. jejuni.*

**Figure 3** is a graph illustrating the effect of varying doses (1, 3 and 5 g/L) formic acid and Alimet^{®} on the number of colony forming units of *S. enteritidis* after 4 hours at pH 4.5 and 6.75.

**Figures 4A** and **4B** are graphs illustrating the effect of varying doses of a combination of formic acid and Alimet^{®} on the number of colony forming units of *S. enteritidis* after 4 hours at pH 4.5 and 6.75.

**Figure 5** is a graph comparing the effects of hydrochloric acid, formic acid, lactic acid, and Alimet^{®} on the number of colony forming units of *E. coli* over time, at pH 4 and 7.3.

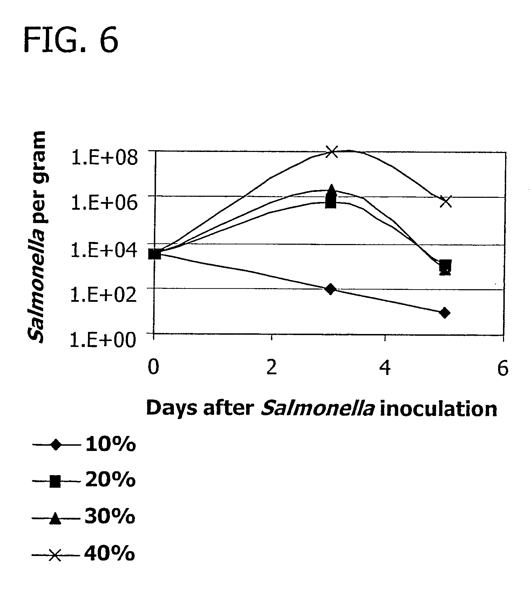

**Figure 6** is a graph showing the effect of moisture level on the number of colony forming units of *Salmonella* in meat meal premix.

**Figure 7** is a graph showing the percent recovery of *Salmonella* for different levels of Alimet^{®} in meat meal premix containing 20% moisture.

**Figure 8** is a graph showing the effect of Alimet^{®} on the number of colony forming units of Salmonella in meat meal premix containing 20% moisture.

**Figure 9** is a graph illustrating the %CO₂ in the headspace for a starter mash with a moisture level of 16.8% having no DLM or Alimet^{®}; with 0.2% DLM; and with 0.2% Alimet^{®}.

**Figure 10** is a graph illustrating the %CO₂ in the headspace for a starter mash with a moisture level of 14.8% having no DLM or Alimet^{®}; with 0.2% DLM; and with 0.2% Alimet^{®}.

**Figure 11** is a graph illustrating the %CO₂ in the headspace for a starter mash with a moisture level of 12.8% having no DLM or Alimet^{®}; with 0.2% DLM; and with 0.2% Alimet^{®} .

**Figure 12** is a graph illustrating the %CO₂ in the headspace for a starter mash with a moisture level of 14.8% having no DLM or Alimet^{®}; with 0.2% Alimet^{®}; with 2 1b/ton 65% propionic acid plus 0.2% DLM; with 1.5 1b/ton 65% propionic acid plus 0.2% DLM; and with 1.0 1b/ton 65% propionic acid plus 0.2% DLM.

**Figure 13** is a graph illustrating the %CO₂ in the headspace for a starter mash with a moisture level of 14.8% with 2 1b/ton 65% propionic acid; with 1.0 1b/ton 65% propionic acid; and with 1.0 1b/ton 65% propionic acid plus 0.2% Alimet^{®}.

**Figure 14** is a graph illustrating the %CO₂ in the headspace for a starter mash with a moisture level of 14.8% with 2 1b/ton 65% propionic acid; with 1.5 1b/ton 65% propionic acid; and with 1.5 1b/ton 65% propionic acid plus 0.2% Alimet^{®}.

**Figure 15** is a graph illustrating the %CO₂ in the headspace for a starter mash treated with propionic acid and propionic acid plus 0.2% Alimet^{®} with a moisture level of 16.8%, 14.8%, 12.8%.

### DETAILED DESCRIPTION

Representative salts of the compound of Formula I include the ammonium, magnesium, calcium, lithium, sodium, potassium, selenium, iron, copper, and zinc salts. In a preferred embodiment, the compound of Formula I is in the form of the calcium salt. Representative amides of the compound of formula (I) include methylamide, dimethylamide, ethylmethylamide, butylamide, dibutylamide, butylmethylamide, alkyl ester of N-acyl methionates (e.g., alkyl N-acetyl methionates. Representative esters of the compound of formula (I) include the methyl, ethyl, n-propyl, isopropyl, butyl esters, namely n-butyl, sec-butyl, isobutyl, and t-butyl esters, pentyl esters and hexyl esters, especially n-pentyl, isopentyl, n-hexyl and isohexyl esters.

Preferably, the concentration of the compound of Formula I in the feed compositions described herein is between about 0.01% and about 5%. In various preferred embodiments, the concentration is between 0.01% and about 4%; between 0.02% and about 3%; between 0.03% and about 2%; between 0.04% and about 1%; between about 0.05% and about 0.6%; and between about 0.06% and about 0.525%. In various particularly preferred embodiments, the concentration is about 0.075%; about 0.125%; about 0.15%; about 0.225%; about 0.25%; about 0.3%; about 0.375%; and about 0.5%.

Microbes in animal feed may be inhibited by treating said feed with a compound of Formula I and two other organic acids as defined above.

Preferably, the combined concentration of the compound of Formula I and the mixture of organic acids in the antimicrobial compositions described herein for mixing with food is between about 0.01% and about 5%. In various preferred embodiments, the combined concentration is between about 0.015% and about 4%; between about 0.02% and about 3%; between about 0.05% and about 2.5%; between about 0.075% and about 2%; between about 0.1% and about 1.5%; between about 0.15% and about 1%; between about 0.4% and about 0.9%; between about 0.5% and about 0.8%; between about 0.01% and about 5%; between about 0.01% and about 4.5%; between about 0.05% and about 4%; between about 0.08% and about 3%; between about 0.1% and about 2.5%; between about 0.01% and about 0.8%; between about 0.01% and about 0.5%; between about 0.05% and about 0.6%; and between about 0.06% and about 0.525%.

In a preferred embodiment of the present invention, the antimicrobial composition further comprises an acidulent. An acidulent is typically a strong acid, preferably a mineral acid. Examples of such acidulents include phosphoric acid, phosphorous acid, sulfuric acid, hydrochloric acid, hydrobromic acid, and nitric acid. In one embodiment, the acidulent is phosphoric acid.

Preferably, the pH of the feed is between about 3 and about 8. Even more preferably, the pH is between about 4 and about 7. Still more preferably, the pH is between about 4.5 and about 6.75. The pH may be measured by placing a known quantity of the feed and placing it in a known quantity of distilled water. The pH of the resulting solution, after sitting, may be measured by any standard means for measuring pH.

In one preferred embodiment, the above-mentioned organic acid is a mixture of formic acid and propionic acid, wherein the formic acid comprises from about 95% to about 5% of the organic acid mixture and the propionic acid comprises from about 5% to about 95% of the organic mixture. Preferably, formic acid comprises from about 85% to about 15% of the organic acid mixture, and propionic acid comprises from about 15% to about 85% of the organic acid mixture. In another preferred embodiment, formic acid comprises from about 85% to about 65% of the organic acid mixture, and propionic acid comprises from about 15% to 35% of the organic acid mixture. In another preferred embodiment, formic acid comprises about 75% of the organic acid mixture, and propionic acid comprises about 25% of the organic acid mixture. This formic/propionic acid mixture can then be combined with the compound of Formula I according to the ratios described above.
In a preferred embodiment, the antimicrobial compositions may further comprise one or more components selected from a third organic acid, and an acidulent. Preferably, the third organic acid is selected from the group consisting of formic acid, acetic acid, propionic acid, butyric acid, benzoic acid, lactic acid, malic acid, tartaric acid, mandelic acid, citric acid, fumaric acid, sorbic acid, boric acid, succinic acid, adipic acid, glycolic acid, and glutaric acid. Preferably, the acidulant is selected from the group consisting of phosphoric acid, sulfuric acid, phosphorous acid, hydrochloric acid, hydrobromic acid, and nitric acid.

It has been discovered that certain antimicrobial compositions of the invention have an improved odor compared to similar compositions without Alimet^{®}. For example, blends comprising formic acid have a pungent odor. In such blends without Alimet^{®}, this odor is more readily detectable than in the same blends containing Alimet^{®}. Without being limited to a particular theory, it is believed that the Alimet^{®} in the blends may lower the vapor pressure of the other organic acids in the blends. Alternatively, the Alimet^{®} may mask the disagreeable odors.

Bacteria in silage may be inhibited by treating said silage with an anti-bacterial composition comprising a compound of Formula I and one or more organic acids as described above. Preferably, the compound of Formula I and other organic acid(s) are added to the silage at about 2 1b/ton to 125 1b/ton of fresh forage combined. In one embodiment, the compound of Formula I and other organic acids are added to the silage at about 4 1b/ton to 100 1b/ton of fresh forage combined. In another embodiment, the compound of Formula I and other organic acids are added to the silage at about 5 1b/ton to 90 1b/ton of fresh forage combined, more preferably about 7 1b/ton to 80 1b/ton of fresh forage combined, more preferably about 8 1b/ton to 70 1b/ton of fresh forage combined, more preferably about 9 1b/ton to 60 1b/ton of fresh forage combined, more preferably about 10 1b/ton to 55 1b/ton of fresh forage combined, more preferably about 12 1b/ton to 50 1b/ton of fresh forage combined, more preferably about 15 1b/ton to 30 1b/ton of fresh forage combined. Optionally, the compositions may further comprise an acidulent, as described herein.

The antimicrobial composition of the invention may inhibit bacteria from the family *Enterobacteriaceae,* Campylobacter or Lactobacillaceae. For example *L. plantarum* or *C. jejuni.* In a particularly preferred embodiment, the bacteria is from the family *Enterobacteriaceae*. In an even more preferred embodiment, the bacteria is from the genus *Salmonella* or *Escherichia.* In a still more preferred embodiment, the bacteria is *S. enteritidis* or *E. coli*.

The above-mentioned compound of Formula I and above-mentioned organic acids may be used in a method of inhibiting bacteria in animal feed comprising computing the concentration in said feed of the compound of Formula I and the mixture of organic acids necessary to inhibit bacteria present in said animal feed, and applying said compound of Formula I and said mixture of organic acids to said feed in an amount sufficient to achieve said concentration.

In another embodiment of the present invention, the above-mentioned compound of Formula I and above-mentioned organic acids may be used in a method of method for inhibiting mold in animal feed comprising directly or indirectly making information available for computing the concentration in said feed of said compound of Formula I and said mixture of organic acids necessary to inhibit bacteria present in said animal feed, and directly or indirectly making information available for applying said compound of Formula I and said mixture of organic acids to said feed in an amount sufficient to achieve said concentration.

The above-mentioned animal feeds may be heat-treated, either before or after administration of the above-mentioned compound of Formula I and organic acids.

Treatment of the animal feed compositions with the compound of Formula I and with the other organic acids disclosed herein may be done by mixing the compound of Formula I and other organic acids with the other ingredients in the feed, such as the corn, soybean meal, meat meal premix, other feed supplements, etc., as the feed is being formulated. Alternatively, the compound of Formula I and other organic acid(s) may be applied to a pre-mixed or pre-pelleted feed. In either case, the compound of Formula I and other organic acid(s) are preferably added as liquids, and uniformly disperse throughout the bulk of the feed composition when applied. Preferably said compound of Formula I and said other organic acids are mixed together before application to the animal feeds. This pre-mixed compound of Formula I/organic acids blend can be applied to the animal feed ingredients during formulation of the feed compositions, or can be applied to pre-mixed or pre-pelleted feed.

Mold in animal feed may be inhibited by treating said feed with an antifungally-effective amount of a compound of Formula I and one or more organic acids as described above, wherein.

The above-mentioned compound of Formula I and above-mentioned organic acids may be used in a method for delaying the formation of mold in an animal feed composition, the method comprising applying a compound of Formula I and one or more organic acids to said feed composition, wherein said feed composition comprises corn and soy. In another embodiment, the moisture content is at least 10%.

The above-mentioned compound of Formula I and above-mentioned organic acids may be used in a method of inhibiting the formation of mold in an animal feed composition, the method comprising applying a compound of Formula I and one or more organic acids to said feed composition, wherein said feed composition has a moisture content of about 17% or less. Preferably, the moisture content is at least 0.01%. In another embodiment, the moisture content is at least 1%. In another embodiment, the moisture content is at least 5%. In another embodiment, the moisture content is at least 10%.

The above-mentioned compound of Formula I and organic acids may be used in a method for inhibiting the growth of mold in an animal feed composition, the method comprising computing the concentration in said feed of the compound of Formula I and mixture of organic acids necessary to inhibit the growth of mold in said feed composition; and applying said compound of Formula I and said mixture of organic acids to said feed composition in said concentration.

The above-mentioned compound of Formula I and organic acids may be used in a method for inhibiting the growth of mold in animal feed comprising computing the concentration in said feed of the compound of Formula I and mixture of organic acids necessary to inhibit the growth of mold in said animal feed; and applying said compound of Formula I and said or mixture of organic acids to said feed in said concentration.

The above-mentioned compound of Formula I and said organic acids may be used in a method for improving the mold resistance of an animal feed composition, the method comprising discontinuing the use of DL-methionine as a feed supplement; computing the concentration in said feed of the compound of Formula I and the mixture of organic acids necessary to inhibit the growth of mold in said animal feed; and applying said compound of Formula I and said mixture of organic acids to said feed in said concentration.

The above-mentioned compound of Formula I and organic acids may be used in a method for inhibiting mold in animal feed directly or indirectly making information available for computing the concentration in said feed of said compound of Formula I and the concentration of said mixture of organic acids necessary to inhibit mold present in said animal feed; and directly or indirectly making information available for applying said compound of Formula I and said mixture of organic acids to said feed in said concentration.

In various preferred embodiments, the compositions or combinations further comprise an acidulant selected from the group consisting of mineral acids, preferably selected from the group consisting of phosphoric acid, sulfuric acid, phosphorous acid, hydrochloric acid, hydrobromic acid, and nitric acid; and/or a third organic acid selected from the group consisting of formic acid, acetic acid, propionic acid, butyric acid, benzoic acid, lactic acid, malic acid, tartaric acid, mandelic acid, citric acid, fumaric acid, sorbic acid, boric acid, succinic acid, adipic acid, glycolic acid, and glutaric acid.

In a still more preferred embodiment, the compositions and combinations described herein comprise HMBA, formic acid, propionic acid, and phosphoric acid. Preferably, the content of HMBA is from about 5% to about 20% of the sum of the HMBA, formic acid, propionic acid, and phosphoric acid content; the content of the formic acid is from about 65% to about 85% of said sum; the content of the propionic acid is from about 1% to about 15% of said sum; and the content of the phosphoric acid is from about 5% to about 20% of said sum. Even more preferably, the content of HMBA is about 10% of said sum; the content of the formic acid is about 75% of said sum; the content of the propionic acid is about 5% of said sum; and the content of the phosphoric acid is about 10% of said sum. Alternatively, the content of HMBA is from about 20% to about 40% of said sum, the content of the formic acid is from about 45% to about 65% of said sum, the content of the propionic acid is from about 1% to about 20% of said sum, and the content of the phosphoric acid is from about 1% to about 15% of said sum; even more preferably, the content of HMBA is about 30% of said sum, the content of the formic acid is about 55% of said sum, the content of the propionic acid is about 10% of said sum, and the content of the phosphoric acid is about 5% of said sum.

In another more preferred embodiment, the compositions and combinations described herein comprise HMBA, butyric acid, lactic acid, and phosphoric acid. Preferably, the content of HMBA is from about 20% to about 40% of the sum of the HMBA, butyric acid, lactic acid, and phosphoric acid content; the content of the butyric acid is from about 10% to about 30% of said sum; the content of the lactic acid is from about 10% to about 30% of said sum; and the content of the phosphoric acid is from about 20% to about 40% of said sum. Even more preferably, the content of HMBA is about 30% of said sum; the content of the butyric acid is about 20% of said sum; the content of the lactic acid is about 20% of said sum; and the content of the phosphoric acid is about 30% of said sum. Alternatively, the content of HMBA is from about 20% to about 40% of said sum of the 2-hydroxy-4-(methylthio)butanoic acid, butyric acid, lactic acid, and phosphoric acid content, the content of the butyric acid is from about 5% to about 25% of said sum, the content of the lactic acid is from about 10% to about 30% of said sum, and the content of the phosphoric acid is from about 25% to about 45% of said sum; more preferably, the content of HMBA, is about 30% of said sum, the content of the butyric acid is about 15% of said sum, the content of the lactic acid is about 20% of said sum, and the content of the phosphoric acid is about 35% of said sum.

In yet another more preferred embodiment, the compositions and combinations described herein comprise HMBA, butyric acid, formic acid, lactic acid, and phosphoric acid. Preferably, the content of HMBA, is from about 10% to about 30% of the sum of the HMBA, butyric acid, formic acid, lactic acid, and phosphoric acid content; the content of the butyric acid is from about 2% to about 22% of said sum; the content of the formic acid is from about 20% to about 40% of said sum; the content of the lactic acid is from about 8% to about 28% of said sum; and the content of the phosphoric acid is from about 10% to about 30% of said sum. Even more preferably, the content of HMBA is about 20% of said sum; the content of the butyric acid is about 12% of said sum; the content of the formic acid is about 30% of said sum; the content of the lactic acid is about 18% of said sum; and the content of the phosphoric acid is about 20% of said sum.

In yet another more preferred embodiment, the compositions and combinations described herein comprise HMBA, butyric acid, lactic acid, propionic acid, and phosphoric acid. Preferably, the content of HMBA is from about 10% to about 30% of the sum of the HMBA, butyric acid, lactic acid, propionic acid, and phosphoric acid content; the content of the butyric acid is from about 2% to about 22% of said sum; the content of the lactic acid is from about 8% to about 28% of said sum; the content of the propionic acid is from about 20% to about 40% of said sum; and the content of the phosphoric acid is from about 10% to about 30% of said sum. Even more preferably, the content of HMBA is about 20% of said sum; the content of the butyric acid is about 12% of said sum; the content of the lactic acid is about 18% of said sum; the content of the propionic acid is about 30% of said sum; and the content of the phosphoric acid is about 20% of said sum.

In yet another more preferred embodiment, the compositions and combinations described herein comprise HMBA, butyric acid, formic acid, propionic acid, and phosphoric acid. Preferably, the content of HMBA is from about 1% to about 20% of the sum of the HMBA, butyric acid, formic acid, propionic acid, and phosphoric acid content; the content of the butyric acid is from about 1% to about 15% of said sum; the content of the formic acid is from about 65% to about 85% of said sum; the content of the propionic acid is from about 1% to about 15% of said sum; and the content of the phosphoric acid is from about 1% to about 15% of said sum. Even more preferably, the content of HMBA is about 10% of said sum; the content of the butyric acid is about 5% of said sum; the content of the formic acid is about 75% of said sum; the content of the propionic acid is about 5% of said sum; and the content of the phosphoric acid is about 5% of said sum.

In yet another more preferred embodiment, the compositions and combinations described herein comprise HMBA, formic acid, and propionic acid. Preferably, the content of HMBA is from about 20% to about 40% of the sum of the HMBA, formic acid, and propionic acid content; the content of the formic acid is from about 40% to about 60% of said sum; and the content of the propionic acid is from about 10% to about 30% of said sum. Even more preferably, the content of HMBA is about 30% of said sum; the content of the formic acid is about 50% of said sum; and the content of the propionic acid is about 20% of said sum.

Microbes in a subject may be inhibited a killed to treating said subject with a composition or combination as described herein. In a preferred embodiment, the subject to be treated is water or food, preferably selected from the group consisting of human food, livestock food, pet food, or aquaculture food.

Animals for which the food, food ingredients and/or feed compositions described herein may be provided include humans, ruminants such as dairy cows, lactating dairy cows, dairy calves, beef cattle, sheep, and goats; aquaculture such as fish and crustaceans (including, but not limited to, salmon, shrimp, carp, tilapia and shell fish; livestock such as swine and horses; poultry such as chickens, turkeys, and hatchlings thereof; and companion animals such as dogs and cats.

The exact formulation of the above-mentioned animal feed composition is not critical to the present invention. Feed ingredients are selected according to the nutrient requirements of the particular animal for which the feed is intended; these requirements depend, inter alia, upon the age and stage of development of the animal, the sex of the animal, and other factors. Feed ingredients may be grouped into eight classes on the basis of their composition and their use in formulating diets: dry forages and roughages; pasture, range plants and forages fed fresh; silages; energy feeds; protein supplements; mineral supplements; vitamin supplements; and additives. See National Research Council (U.S.) Subcommittee on Feed Composition, United States-Canadian Tables of Feed Composition, 3d rev., National Academy Press, pp. 2, 145 (1982). These classes are, to a certain extent, arbitrary, as some feed ingredients could be classified in more than one class. Typically, a feed formulation will also depend upon the costs associated with each ingredient, with the least-expensive composition of ingredients which gives the needed nutrients being the preferred formulation.

Silage is a forage product that is produced from the harvest, storage and fermentation of green forage crops such as corn and grain sorghum plants. These crops are chopped, stems and all, before the grain is ready for harvest. The plant material is stored in silos, storage bags, bunkers or covered piles causing the material to ferment, thereby lowering the pH and preserving the plant material until it can be fed. The ensiled forage is subject to changes in pH, temperature, and oxygen levels.

As noted above, feed formulations depend in part upon the age and stage of development of the animal to be fed. Leeson and Summers (Nutrition of the Chicken, 4th ed., pp. 502-510, University Books (2001)) describe several representative poultry diets for pullets, layers, broilers and broiler breeders. For Example, most chicken diets contain energy concentrates such as corn, oats, wheat, barley, or sorghum; protein sources such as soybean meal, other oilseed meals (e.g., peanut, sesame, safflower, sunflower, etc.), cottonseed meal, animal protein sources (meat and bone meal, dried whey, fish meal, etc.), grain legumes (e.g., dry beans, field peas, etc.), and alfalfa; and vitamin and mineral supplements, if necessary (for instance, meat and bone meal is high in calcium and phosphorous, and thus these minerals do not need to be supplemented in a feed ration containing meat and bone meal). The relative amounts of the different ingredients in poultry feed depends in part upon the production stage of the bird. Starter rations are higher in protein, while grower and finisher feeds can be lower in protein since older birds require less protein. Model diets for swine and other animals are also available, and may be modified according to the particular needs of the animal(s) to be fed.

The term "inhibit" when used herein in phrases such as "inhibiting bacteria" means any one or more of (a) killing bacteria or mold; (b) any decrease in growth of the bacteria or mold, which may be measured in terms of colony counts; (c) any decrease in the concentration of bacteria or mold; or (d) the inability of bacteria or mold to grow on a particular selection medium. Each of these may be determined, for instance, by comparing the bacterial or fungal colony counts or concentration of bacteria or mold present in the absence of the application of the methods described herein with the bacterial or fungal colony counts or concentration of bacteria or mold after application of the methods of the present invention. Application of suitable bactericides or fungicides will show a ten-fold difference in colony counts.

Certain methods described herein call for computing, for instance, the concentration, of a compound of Formula I in an animal feed, necessary to inhibit bacteria or mold present in an animal feed, or the concentration of a compound of Formula I and another organic acid or acids necessary to inhibit bacteria or mold present in an animal feed. Provided herein are Examples and Comparative Examples 1-24, which illustrate amounts of compound of Formula I and/or other organic acids that are sufficient to inhibit bacteria or mold. Also provided hereinabove and hereinbelow are acceptable ranges of amounts of compound of Formula I and/or other organic acids, and ratios between the two, which are suitable for use the methods of the present invention. Other suitable concentrations, ranges and ratios can be determined as needed.

The term "cfu" stands for colony forming units.

The following examples illustrate the invention.

### Comparative EXAMPLE 1

The effects of increasing quantities of formic acid and/or Alimet^{®} on the colony counts of four bacteria (*E. coli, S. enteritidis, L. plantarum* and *C. jejuni*) were studied. Varying amounts of formic acid or Alimet^{®} were added individually to cultures of these bacteria at pH 4.5 or 6.75 and the cultures were incubated for a length of time, whereupon colony counts were performed.

The *S. enteritidis* culture for the *in vitro* study contained a mixture of *S. enteritidis* ID-Lelystad (nalidixic acid resistant strain) and *S. enteritidis* (97.07773 RIVM, isolated from poultry). The *E. coli* culture contained a mixture of *E. coli* O149K91K88 (VA2000-08915, pig pathogen) and *E. coli* ATCC 25922. The *L. plantarum* culture studied was *L. plantarum* Bd 99.00553. The *C. jejuni* culture studied was *C. jejuni* C356, ex. ID-Lelystad.

*S. enteritidis* and *E. coli* from fresh overnight cultures in Brain Heart Infusion broth were incubated aerobically in phosphate buffered (0.11 M) salt solution (8.5 g/L NaCl) with peptone (1 g/L), except for *S*. *enteritidis* at pH 4.5. For this culture, medium 5 was used as the broth, and the culture was incubated aerobically for 4 hours at 37°C. Colony counts were performed according to standard operating procedures.

The fresh overnight culture of *L. plantarum* in brain heart infusion broth were used to inoculate medium 5. The test tubes were incubated under reduced oxygen atmosphere for 6 hours at 37°C. Colony counts were performed.

*C. jejuni* grown on Campylobacter blood-free selective agar was used for inoculation. Preston broth was incubated under reduced oxygen atmosphere for 6 hours at 37 °C. Colony counts were performed.

Formic acid and Alimet^{®} were added to the bacterial cultures in concentrations of 0.108 g/L, 0.30 g/L and 0.83 g/L. These dosages were chosen based on commercial use of Alimet^{®} and an approximate 10-fold dilution in the proximal digestive tract.

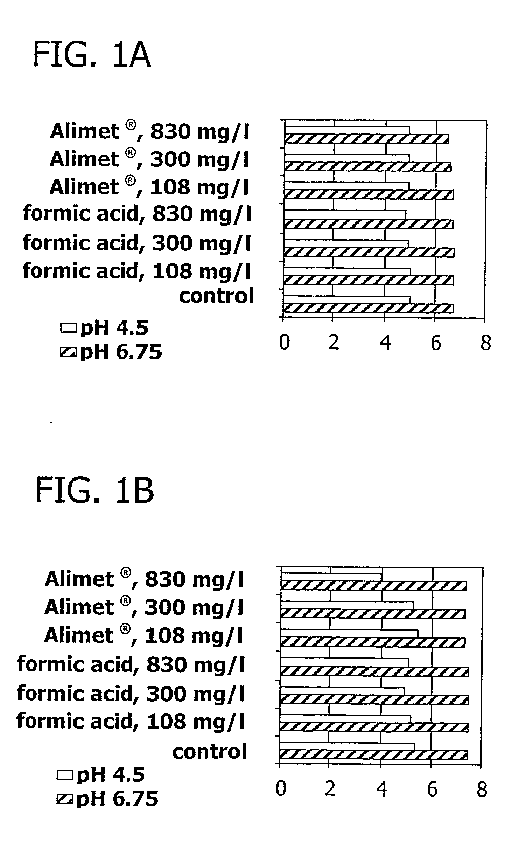

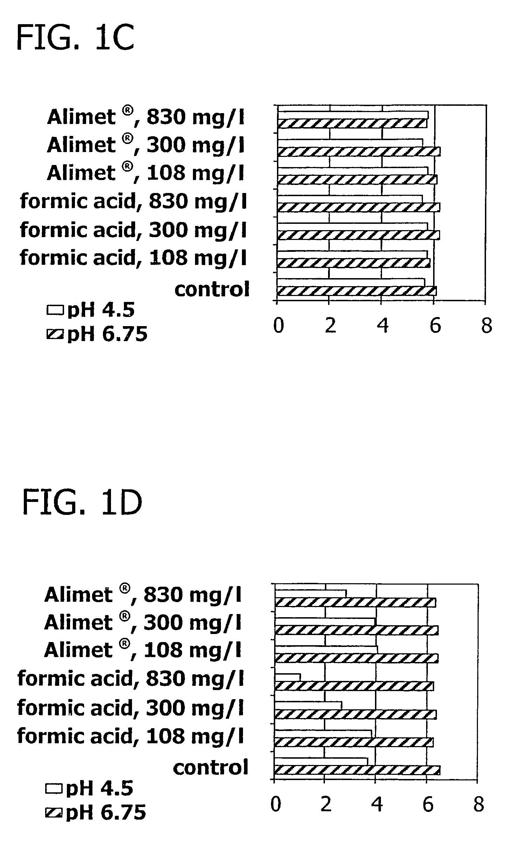

A summary of the results obtained with formic acid and Alimet^{®} on *S*. *enteritidis* and *E. coli* is given in **Tables 1** and **2,** and on *L. plantarum* and *C. jejuni* in **Tables** 3 and 4; the results are illustrated in **Figures 1-4****.**

| **Table 1** | | | | | |
|---|---|---|---|---|---|
| Effect of formic acid and Alimet^{®} on population of *S. enteritidis* after 4 hours at pH 4.5 and 6.75 | | | | | |
| initial colony count: 5.23 log cfu/mL | | | | | |
| **Acid (g/L)** | | **pH = 4.5** | | **pH = 6.75** | |
| Alimet^{®} | **Formic** | **log cfu/mL** | **Δ log** | **log cfu/mL** | **Δ log** |
| - | - | 5.03 | -0.20 | 6.62 | 1.42 |
| 0.108 | - | 4.92 | -0.31 | 6.71 | 1.51 |
| 0.30 | - | 4.96 | -0.27 | 6.63 | 1.43 |
| 0.83 | - | 4.93 | -0.30 | 6.53 | 1.33 |
| - | 0.108 | 5.04 | -0.19 | 6.79 | 1.59 |
| - | 0.30 | 4.96 | -0.27 | 6.77 | 1.57 |
| - | 0.83 | 4.86 | -0.38 | 6.72 | 1.52 |

| **Table 2** | | | | | |
|---|---|---|---|---|---|
| Effect of formic acid and Alimet^{®} on population of *E. coli* after 4 hours at pH 4.5 and 6.75 | | | | | |
| initial colony count: 5.24 log cfu/mL | | | | | |
| **Acid (g/L)** | | **pH = 4.5** | | **pH = 6.75** | |
| Alimet^{®} | **Formic** | **log cfu/mL** | **Δ log** | **log cfu/mL** | **Δ log** |
| - | - | 5.36 | 0.12 | 7.47 | 2.23 |
| 0.108 | - | 5.45 | 0.21 | 7.33 | 2.09 |
| 0.30 | - | 5.25 | 0.01 | 7.36 | 2.12 |
| 0.83 | - | 3.96 | -1.28 | 7.39 | 2.15 |
| - | 0.108 | 5.19 | -0.05 | 7.48 | 2.24 |
| - | 0.30 | 4.96 | -0.28 | 7.50 | 2.26 |
| - | 0.83 | 5.08 | -0.16 | 7.49 | 2.25 |

| **Table 3** | | | | | |
|---|---|---|---|---|---|
| Effect of formic acid and Alimet^{®} on population of *L. plantarum* after 6 hours at pH 4.5 and 6.75 | | | | | |
| initial colony count: 5.04 log cfu/mL Δ log = logₛₐₘₚₗₑ - logᵢₙᵢₜᵢₐₗ | | | | | |
| **Acid (g/L)** | | **pH = 4.5** | | **pH = 6.75** | |
| Alimet^{®} | **Formic** | **log cfu/mL** | **Δ log** | **log cfu/mL** | **Δ log** |
| - | - | 5.67 | 0.63 | 6.10 | 1.06 |
| 0.108 | - | 5.67 | 0.63 | 6.09 | 1.05 |
| 0.30 | - | 5.57 | 0.53 | 6.20 | 1.16 |
| 0.83 | - | 5.74 | 0.70 | 5.70 | 0.66 |
| - | 0.108 | 5.75 | 0.71 | 5.88 | 0.84 |
| - | 0.30 | 5.74 | 0.70 | 6.23 | 1.19 |
| - | 0.83 | 5.56 | 0.52 | 6.19 | 1.15 |

| **Table 4** | | | | | |
|---|---|---|---|---|---|
| Effect of formic acid and Alimet^{®} on population of *C. jejuni* after 6 hours at pH 4.5 and 6.75 | | | | | |
| initial colony count: 5.23 log cfu/mL | | | | | |
| **Acid (g/L)** | | **pH = 4.5** | | **pH = 6.75** | |
| Alimet^{®} | **Formic** | **log cfu/mL** | **Δ log** | **log cfu/mL** | **Δ log** |
| - | - | 3.70 | -1.53 | 6.54 | 1.31 |
| 0.108 | - | 0.108 | 4.07 | -1.16 | 6.44 |
| 0.30 | - | 0.30 | 3.95 | -1.28 | 6.40 |
| 0.83 | - | 0.83 | 2.80 | -2.43 | 6.34 |
| - | 0.108 | 3.86 | -1.37 | 6.27 | 1.04 |
| - | 0.30 | 2.63 | -2.60 | 6.38 | 1.15 |
| - | 0.83 | < 1.30 | < -3.93 | 6.25 | 1.02 |

*S. enteritidis:* Prior to inoculation, the *S. enteritidis* cultures had a colony count of 5.03 log cfu/mL at pH 4.5, and of 6.62 at pH 6.75. The results obtained at both pH values were similar for Alimet^{®} and formic acid: at pH 4.5, neither had a significant effect on inhibiting the growth of *S*. *enteritidis;* at pH 6.75, no inhibition of *S. enteritidis* was observed.

*E. coli:* Prior to inoculation, at pH 4.5, the *E. coli* cultures had a colony count of 5.36 log cfu/mL; at pH 6.75, it was 7.47. 0.83 g/L Alimet^{®} gave approximately a 1.3 log reduction of *E. coli* growth at pH 4.5, compared to the approximately 0.1 log reduction by the same concentration of formic acid at pH 4.5. Lower concentrations of both Alimet^{®} and formic acid showed little or no inhibition. Neither Alimet^{®} nor formic acid inhibited *E. coli* at pH 6.75.

*L. plantarum*: Prior to inoculation, at pH 4.5, the *L. plantarum* cultures had a colony count of 5.67 log cfu/mL; at pH 6.75, it was 6.10. Neither Alimet^{®} nor formic acid inhibited *L. plantarum* at either pH studied.

*C*. *jejuni:* Prior to inoculation, at pH 4.5, the *C. jejuni* cultures had a colony count of 3.70 log cfu/mL; at pH 6.75, it was 6.54. All doses of Alimet^{®} inhibited *C. jejuni* at pH 4.5. 0.83 g/L of Alimet^{®} gave approximately a 2.4 log reduction of *C. jejuni* growth at this pH. Lower dosages of Alimet^{®} (0.108 g/L and 0.30 g/L) gave approximately 1.1 and 1.2 log reductions, respectively. Formic acid demonstrated comparable inhibition. No antibacterial activity was shown against *C. jejuni* at pH 6.75 for any Alimet^{®} or formic acid concentration studied.

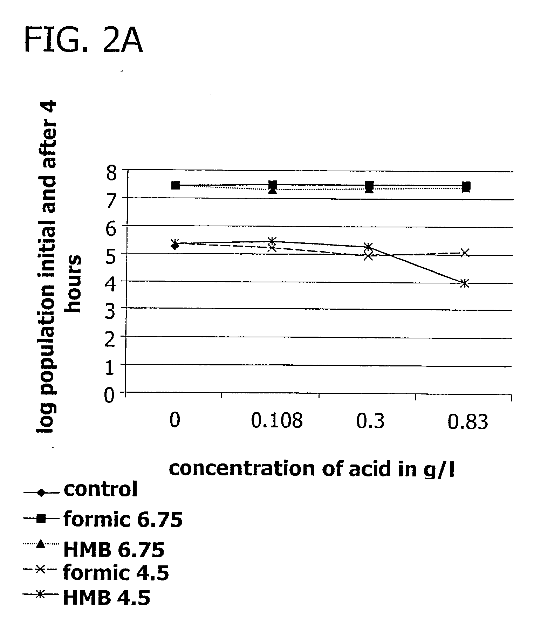

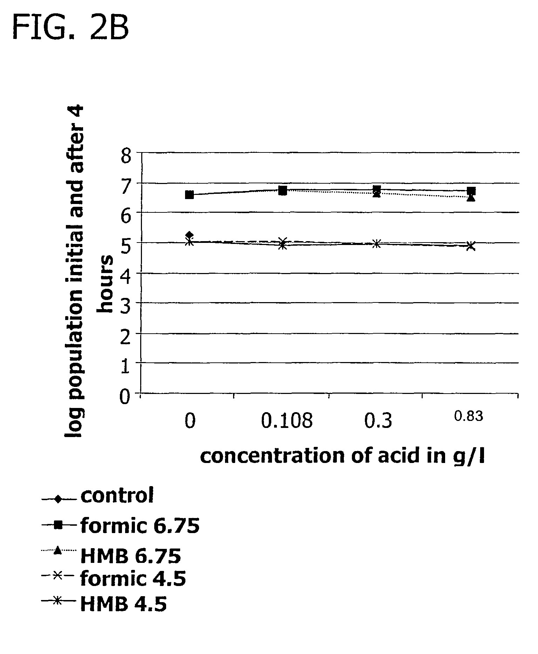

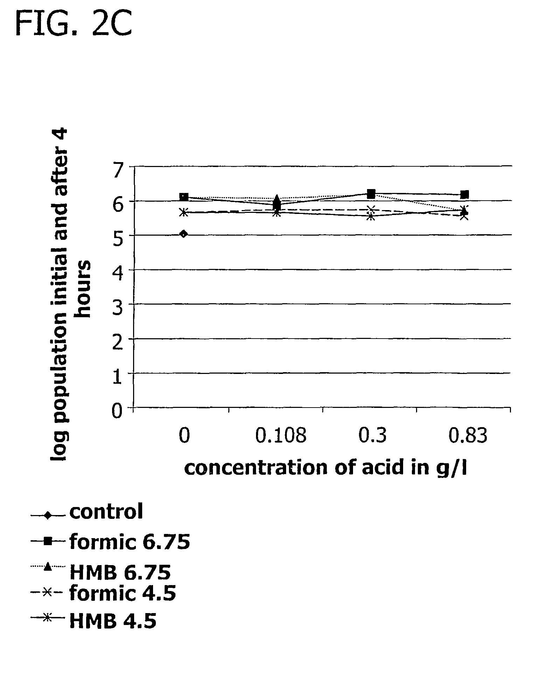

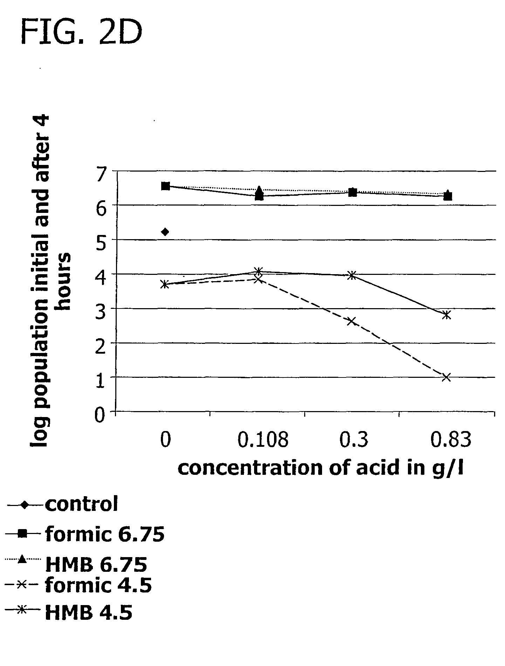

These results are demonstrated graphically in **Figures 1A, 1B****,** **1C,** and **1D****.** **Figures 2A****,** **2B****,** **2C****,** and **2D** demonstrate the pH dependent effects of formic acid and Alimet^{®}. None of the four bacteria studied were inhibited by either formic acid or Alimet^{®} at pH of 6.75; in fact, at this pH, the colony forming unit count of each bacteria increased, with the *E. coli* count increasing the most, and *L. plantarum* increasing the least.

### Comparative EXAMPLE 2

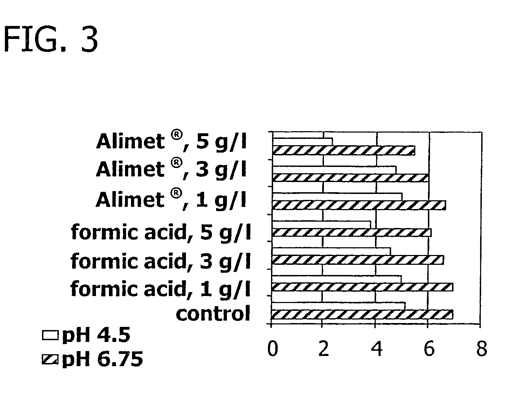

The effect of higher dosages of Alimet^{®} and formic acid on the colony count of S. enteritidis cultures was studied, following the procedure described in **Example** 1. The results obtained are given in **Table 5** and illustrated in **Figure 3****.**

| **Table 5** | | | | | |
|---|---|---|---|---|---|
| Effect of formic acid and Alimet^{®} on population of *S. enteritidis* after 4 hours at pH 4.5 and 6.75 | | | | | |
| initial colony count: 5.23 log cfu/mL | | | | | |
| **Acid (g/L)** | | **pH = 4.5** | | **pH = 6.75** | |
| Alimet^{®} | **Formic** | **log cfu/mL** | **Δ log** | **log cfu/mL** | **Δ log** |
| - | - | 5.15 | -0.09 | 6.92 | 1.69 |
| 1 | - | 5.02 | -0.21 | 6.61 | 1.38 |
| 3 | - | 4.76 | -0.48 | 5.97 | 0.74 |
| 5 | - | 2.37 | -2.86 | 5.43 | 0.20 |
| - | 1 | 5.01 | -0.22 | 6.92 | 1.69 |
| - | 3 | 4.55 | -0.68 | 6.58 | 1.35 |
| - | 5 | 3.83 | -1.41 | 6.10 | 0.87 |

Prior to inoculation, the *S. enteritidis* cultures had a log cfu/mL of 5.15 at pH 4.5, and of 6.92 at pH 6.75. At pH 6.75, the addition of 5 g/L formic acid or 3 g/L Alimet^{®} gave approximately a 1 log cfu/mL growth inhibition. An addition of 5 g/L Alimet^{®} stops the growth of *S. enteritidis*. At pH 4.5, 5 g/L Alimet^{®} reduces the growth of *S. enteritidis* by approximately 2.8 log cfu/mL. Lower concentrations of Alimet^{®} gives a smaller effect. Formic acid at 5 g/L reduces the growth of *S. enteritidis* by approximately 1.3 log cfu/mL. Thus, at the dose ranges studied, the antibacterial effect of Alimet^{®} against *S. enteritidis* is greater than that of formic acid. These results are demonstrated graphically in **Figure 3**.

### Comparative EXAMPLE 3

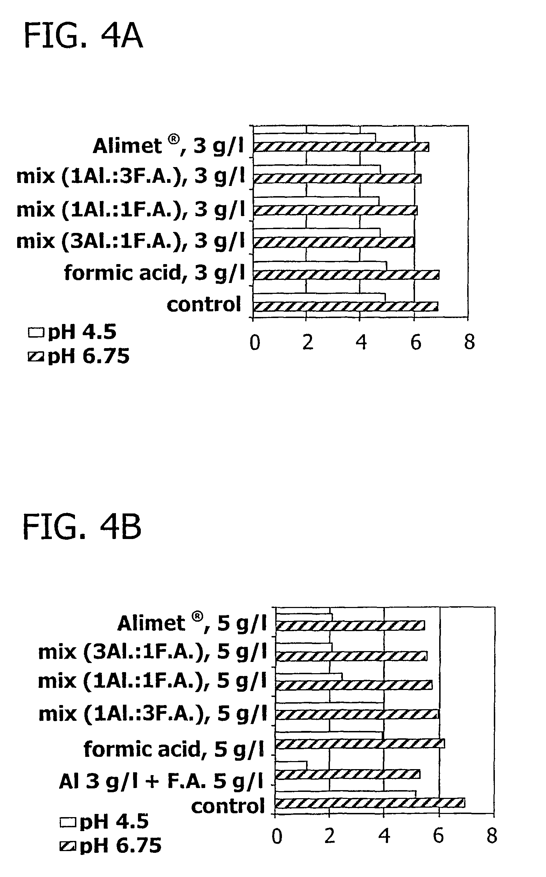

Combinations of Alimet^{®} and formic acid were studied, following the procedure described in **Example 1.** The results obtained are given in **Table 6** and illustrated in **Figures 4A** and **4B****.**

| **Table 6** | | | | | |
|---|---|---|---|---|---|
| Effect of formic acid and Alimet^{®} on population of *S. enteritidis* after 4 hours at pH 4.5 and 6.75 | | | | | |
| initial colony count: 5.15 log cfu/mL) | | | | | |
| Acid (g/L) | | **pH** = **4.5** | | **pH** = **6.75** | |
| Alimet^{®} | **Formic** | **log cfu/mL** | **Δ log** | **log cfu/mL** | **Δ log** |
| - | - | 4.99 | -0.17 | 6.87 | 1.80 |
| 3 | - | 4.76 | -0.39 | 5.89 | 0.82 |
| 5 | - | 2.07 | -3.08 | 5.45 | 0.38 |
| - | 3 | 4.57 | -0.58 | 6.51 | 1.44 |
| - | 5 | 3.94 | -1.21 | 6.19 | 1.12 |
| 0.75 | 2.25 | 4.78 | -0.37 | 6.27 | 1.20 |
| 1.25 | 3.75 | 4.01 | -1.14 | 5.94 | 0.88 |
| 1.50 | 1.50 | 4.73 | -0.42 | 6.11 | 1.04 |
| 2.25 | 0.75 | 4.78 | -0.37 | 5.97 | 0.90 |
| 2.50 | 2.50 | 2.48 | -2.67 | 5.74 | 0.67 |
| 3 | 5 | 1.15 | -4.00 | 5.31 | 0.24 |
| 3.75 | 1.25 | 2.11 | -3.04 | 5.54 | 0.47 |

Combinations of Alimet^{®} and formic acid having a combined concentration of 5 g/L inhibit growth of *S. enteritidis* to a greater extent than do combinations having a combined concentration of 3 g/L. Three 5 g/L combinations were prepared, having Alimet^{®}-to-formic acid ratios of 1:3, 1:1, and 3:1.

At pH 4.5, treatment with 3 g/L of Alimet^{®} alone gave an approximately 0.4 log cfu/mL reduction in *S. enteritidis* growth. Treatment at that pH with 5 g/L of formic acid gave an approximately 1.2 log cfu/mL reduction. Remarkably, treatment with a combination of 3 g/L Alimet^{®} and 5 g/L formic acid gave a reduction of 4 log cfu/mL, which was higher than expected given the individual results with Alimet^{®} and formic acid at those levels. The results obtained suggest that at pH 4.5, combinations of 2.5 g/L Alimet^{®} and 2.5 g/L formic acid, and with 3 g/L Alimet^{®} and 5 g/L formic acid may have a synergistic effect. The latter combination gives the best results of all tested combinations: at pH 4.5, this combination gives 4 log (almost complete) reduction of *S. enteritidis.*

### Comparative EXAMPLE 4

The effects of blends of organic acids (butyric, citric, formic, lactic, and propionic) and Alimet^{®} on the colony counts of *E*. *coli* (ATCC 25922) grown in trypticase soy broth at 35°C according to the manufacturer's instructions were studied. Blends of organic acid:Alimet^{®} of 2:1 and 5:1 were studied, at a total concentration (organic acid + Alimet^{®}) of 6 g/L.

The pH of the solutions were originally adjusted to pH 5 by addition of HCl and/or NaOH as needed. Activated E. coli culture solutions were transferred to fresh soy broth twice at 24-hour intervals prior to before addition of the organic acid:Alimet^{®} blend. E. coli culture solutions were centrifuged; pellet produced was resuspended with Butterfield buffer, and the resulting solutions were diluted to approximately 10⁷ CFU *E. coli*/mL.

Bottles were inoculated with 100 µL of prepared bacterial suspension and an organic acid:Alimet^{®} blend. Samples were taken after five and 24 hours of incubation, serially diluted and spread-plated on trypticase soy agar, and incubated at 35°C for 24 hours. Populations of *E. coli* are reported in **Table 7** below.

| **Table 7** | | | | |
|---|---|---|---|---|
| Effect of Alimet^{®}/acid blends on *E. coli* populations in trypticase soy broth | | | | |
| initial colony count: 4.97 log cfu/mL | | | | |
| **Acid** | **Acid:Alimet^{®} ratio** | **original pH** | **log cfu/mL** | |
| | | | **t=4h** | **t=24h** |
| Control | - | - | 7.18 | 9.22 |
| HCl | - | - | 7.85 | 8.34 |
| lactic | 5:1 | ca. 4.2 | 4.68 | 3.98 |
| | 2:1 | 4.1 | 4.87 | 4.45 |
| formic | 5:1 | 3.1 | 4.95 | <1 |
| | 2:1 | 3.56 | 4.95 | 1.00 |
| citric | 5:1 | 4.75 | 6.38 | 8.59 |
| | 2:1 | 4.59 | 5.90 | 8.66 |
| butyric | 5:1 | 4.62 | 4.77 | 3.70 |
| | 2:1 | 4.6 | 4.85 | 3.80 |
| propionic | 5:1 | 4.54 | 4.79 | 4.57 |
| | 2:1 | 4.53 | 4.83 | 4.53 |

Blends with formic acid were the most effective among the tested blends to control E. coli at both 5:1 and 2:1 blends of formic acid:Alimet^{®}. Upon prolonged exposure (after 5 hours), both ratio give nearly complete reduction of *E. coli.* Blends of lactic, butyric and propionic acids with Alimet^{®} suppressed the growth of *E. coli*, but did not reduce the bacterial population in 24 hours.

### Comparative EXAMPLE 5

The effects of hydrochloric acid, formic acid, lactic acid, or Alimet^{®} on the colony counts of *E. coli* were studied. Amounts of formic acid, lactic acid, or Alimet^{®} were added to cultures of *E. coli,* grown in a soy broth, at pH 4 or 7.3. The cultures were incubated, and colony counts performed at increasing times.

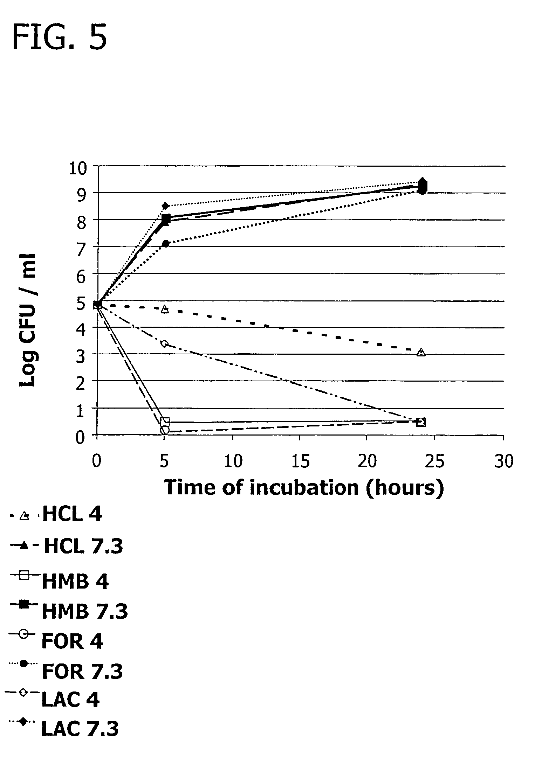

The results are illustrated in **Figure 5****.** Formic and lactic acid, and Alimet^{®}, decreased the colony counts of *E. coli* better than hydrochloric acid. As in **Example 1,** Alimet^{®} showed a better reduction of *E. coli* colony counts as compared to formic acids, and showed comparable reduction compared to lactic acid.

### Comparative EXAMPLE 6

The effect of Alimet^{®} on *Salmonella* in a meat meal premix was studied according to the protocol set forth by Smyser and Snoeyenbos (Poultry Sci. 58 (1979) 50-54). Meat meal premix (Papillon Ag Products, Inc., Easton, MD) containing approximately 77% crude protein was used in the assays. Ten grams of premix test sample for each concentration of Alimet^{®} studied were measured into a sterile tube (three replicates per sample). Sterile water (1 mL) was added to each tube to assure adequate moisture for salmonella multiplication. A final moisture level of 20% was achieved after inoculation. Each test sample was inoculated with 1.0 mL of a diluted TSB broth culture of nalidixic acid (NA) resistant Salmonella (approximately 10^{3.5} cells/g as determined from spread plate counts of the culture). The inoculated samples were mixed with a sterile tongue blade or equivalent tool and incubated at 37°C for the duration of the trial.

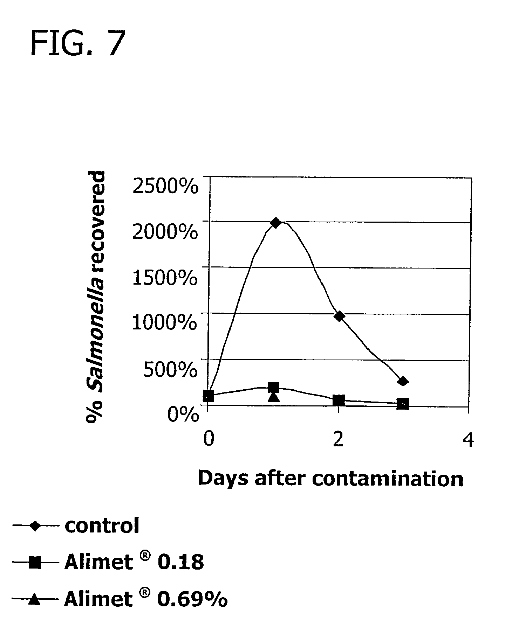

*Salmonella* counts were determined using brilliant green agar containing sodium nalidixate at days 1, 2 and 3. A 1 g test sample was taken from each tube and transferred to 9 mL sterile water. This test sample was incubated at 4°C for approximately 4 hours, then agitated for 60-90 seconds. Each test sample was serially diluted in 1:10, 1:100 and 1:1000 proportions, and 100 µL of undiluted test sample, 1:10 diluted sample, 1:100 diluted sample, and 1:1000 diluted samples were plated on brilliant green agar plates containing sodium nalidixate. The percent recovery of *Salmonella* for different levels of Alimet^{®} is reported in **Table 8** and **Figure 7****.**

| **Table 8** | | | | | |
|---|---|---|---|---|---|
| Recovery of *Salmonella* in meat meal premix with 20% moisture; 1:10 dilution | | | | | |
| **Alimet^{®} conc. (reported)** | **Alimet^{®} conc. (found)** | **% *Salmonella* recovered** | | | |
| | | **day 0** | **day 1** | **day 2** | **day 3** |
| control (0%) | | 100% | 1990% | 971% | 267% |
| 0.275% | 0.056% | 100% | 102% | 67% | < 3%* |
| 0.18% | 0.140% | 100% | 190% | 65% | 11% |
| 0.25% | 0.188% | 100% | 476% | 139% | 25% |
| 0.36% | 0.192% | 100% | 114 % | 62% | 4% |
| 0.40% | 0.220% | 100% | 343% | 267% | 53% |
| 0.69% | 0.631% | 100% | 5% | < 3%* | < 3%* |
| * below detection limit | | | | | |

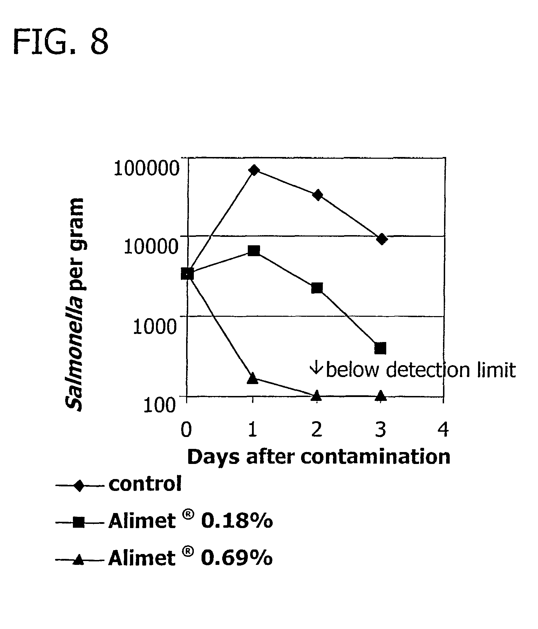

The control sample (no Alimet^{®} added) showed an initial steep increase in Salmonella population one day after inoculation, indicating multiplication of the bacteria. This multiplication was followed by a gradual decline in the bacterial counts on days 2 and 3. Results from the highest level of Alimet^{®} tested suggest that Alimet® is bactericidal for *Salmonella* in meat and bone meal. As **Figure 8** illustrates, Alimet^{®} at this level gives results comparable to treatment with formic acid at 1.65% (15 kg/ton). See Liu, "Using Organic Acids to Control Salmonella in Poultry Production," Kemin Industries (Asia) Pte Limited, Singapore, available at http://www.kemin.com.

Alimet^{®} in the range of 0.14-0.22% likewise showed anti-*Salmonella* effects, and does not appear to be dose-dependent in this range. However, each sample was from different batches of MBM, which may be responsible for the lack of dose-response. The initial multiplication seen in the control was significantly reduced upon addition of Alimet^{®} at these levels. The subsequent decline occurred faster for these lower levels of Alimet^{®} compared to the control.

### Comparative EXAMPLE 7

Fungal growth in basal starter mash was studied in compositions supplemented with DLM or Alimet^{®} as the methionine source. Total microbial growth was monitored by measuring carbon dioxide (CO₂) formation in sealed vessels at 28°C over time. Measurement of CO₂ formation does not distinguish between bacterial and mold growth; however, the ability of mold to grow at much lower water activities, compared to bacteria, is well known, and both mold and bacteria play a part in feed degradation.

The technique of using a closed system and measuring CO₂ formation has been verified as an approximation of the conditions found in grain storage bins. See, e.g., Muir et al., Trans. ASAE, 28(5) 1673-1675 (1985), the contents of which are hereby incorporated by reference in their entirety.

A mash starter mash feed (formulation shown in **Table 9**, below) was subdivided into three groups: basal (control), 0.2% DLM, or 0.2% Alimet^{®}. The feed studied had no commercial mold inhibitors added, and is representative of a typical broiler feed.

Initial moisture of the feed was 10.8%. After the addition of Alimet^{®} or DLM, the moisture of the samples was adjusted by the addition of 2%, 4%, or 6% sterile distilled water to promote mold growth, achieving three moisture groups: 83.2% dry matter/12.8% moisture; 85.2% dry matter/14.8% moisture; and 87.2% dry matter/16.8% moisture.

For each study, four replicate samples of each moisture group were mixed, and 600 g of the mixture was placed into 1L containers, sealed, and placed at 28°C in a temperature-controlled room. Draeger Detector tubes (CO₂-measuring, obtained from Fisher Scientific) were used to measure the developed CO₂ at different days following vessel sealing (two measurements were made per week). Draeger Short-Term Detector Tubes are glass tubes filled with inert carrier and an indicating reagent. The reagent produces a colorimetric indication in the presence of a particular gas (CO₂). The concentration of gas is read directly from the discoloration on the tube's printed scale.

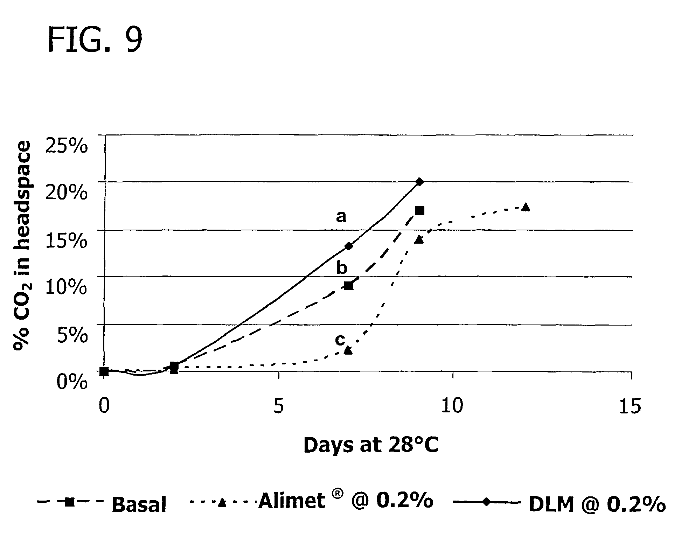

The specific mold species present were not identified. Statistical analysis was accomplished by using Duncan's multiple range test (SAS). Different letters on individual time points in **Figures 9-11** indicate statistical differences of P < 0.05.

| **Table 9** | |
|---|---|
| Basal starter mash formulation | |
| **Ingredient** | **% by weight of total mix** |
| Corn | 60.551 |
| Soybean meal | 32.254 |
| Fat, animal | 3.665 |
| Dical940224PhosfromD (dicalcium phosphate) | 1.861 |
| Limestone | 0.811 |
| Novus Vitamin/Mineral premix manufactured by Trouw Nutrition (Highland, Illinois) | 0.350 |
| Salt | 0.340 |
| L-lysine HCl 78% | 0.097 |
| Threonine | 0.051 |
| Santoquin-mix6 Antioxidant preservative sold by Solutia Inc. (St. Louis, Missouri) | 0.019 |
| Copper Sulfate | 0.003 |

As shown in **Figure 9**, Alimet^{®} effectively inhibited mold growth for up to seven days at the highest moisture level tested (83.2% dry matter/16.8% moisture), while DLM was the least effective, and, in fact, showed mold growth within two days. In fact, DLM-treated starter mash showed mold growth faster than basal mash (i.e., feed with no added methionine or methionine analog), and faster than the Alimet^{®}-treated mash, for all moisture levels tested.

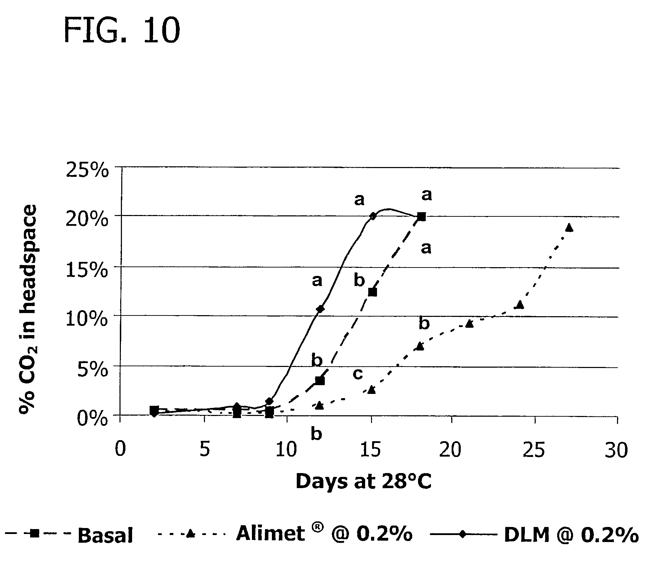

As demonstrated in **Figure 10**, Alimet^{®}-treated feed showed a slower rate of mold growth in 85.2% dry matter/14.8% moisture feed, than the DLM-treated feed.

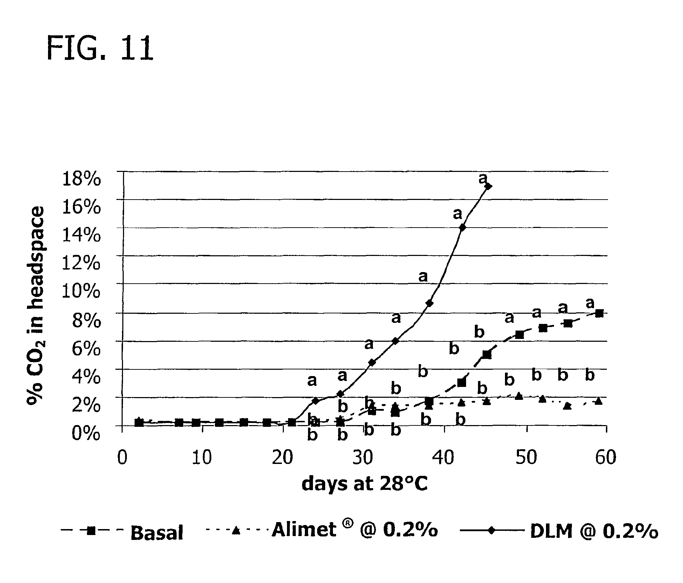

For feed having 87.2% dry matter/12.8% moisture, Alimet^{®}-treated feed shows low mold levels for up to sixty days, while DLM-treated feed shows a sharp increase in mold growth after only twenty days (see **Figure** 11).

**Figures 9**, **10**, and **11** each illustrate that DLM treated mash is more likely to develop mold than either methionine-deficient feed or feed treated with Alimet^{®}, and that Alimet^{®} was more effective in inhibiting mold growth than compared to untreated feed, or feed supplemented with DLM.

### Comparative EXAMPLE 8

The experiment described above in **Example 7** was repeated with blends of 2.0 lb/ton, 1.5 lb/ton, 1.0 lb/ton or 0.5 lb/ton of 65% propionic acid and either 2% Alimet^{®} or 2% DLM. The blends were prepared according to the matrix outlined in **Table 8**, below. The 65% propionic acid was buffered with ammonium hydroxide to a pH of 5.5.

| **Table 10** | | | |
|---|---|---|---|
| Antifungal blends of Aliment^{®} or DLM with propionic acid | | | |
| **Trial No.** | **Alimet^{®} (%)** | **Propionic (lb/ton)** | **DLM (%)** |
| 1 | 0.2 | - | - |
| 2 | - | 2 | 0.2 |
| 3 | - | 1.5 | 0.2 |
| 4 | - | 1.0 | 0.2 |
| 5 | - | 0.5 | 0.2 |
| 6 | - | - | 0.2 |
| 7 | 0.2 | 2 | - |
| 8 | 0.2 | 1.5 | - |
| 9 | 0.2 | 1.0 | - |
| 10 | 0.2 | 0.5 | - |

Statistical analysis was accomplished by using Duncan's multiple range test (SAS). Different letters on individual time points in graphs indicate statistical differences of P<0.05.

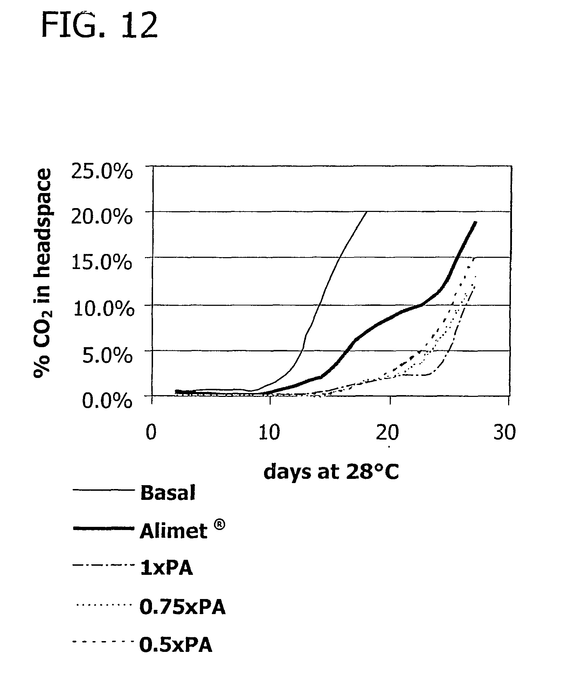

As shown in **Figure 12**, basal diet having 85.2% dry matter and containing 0.2% Alimet^{®} delayed the onset of mold growth by 5 days; the effect of 2.0 lb/ton, 1.5 lb/ton and 1.0 lb/ton 65% propionic acid is about 11 days, i.e, no significant difference was seen when propionic acid was added beyond 1 lb/ton.

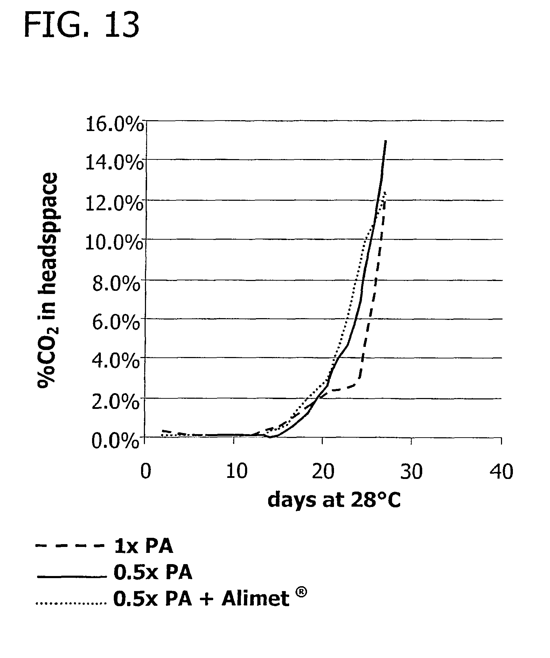

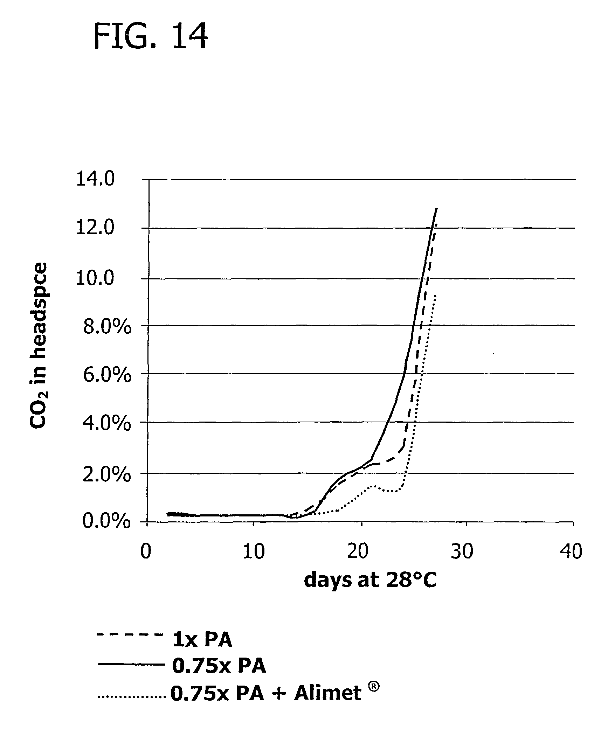

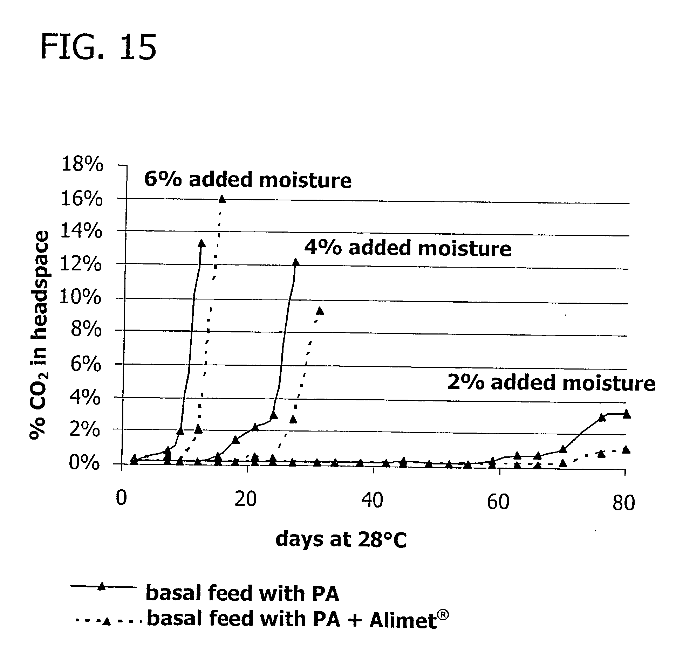

Combinations of Alimet^{®} and propionic acid were compared to feed treated with propionic acid alone, and the results are shown in **Figures 13-15**. The results indicate that, for all moisture levels studied, basal feed containing Alimet^{®} plus propionic acid showed improved mold inhibition compared to feed containing only propionic acid.

### Comparative EXAMPLE 9

The effect of formic, butyric and lactic acids on *Salmonella* populations in basal corn soy based broiler starter feed was studied to determine the levels of these acids required for complete bacteriacide.

Tests were carried out using 1 g feed (crumble ground) with 6% meat and bone meal ("MBM"). Aqueous 25% solutions of formic, butyric, and lactic acids were prepared. The acid solutions were added to the feed as indicated below; water (1 mL) and 150 mM HCl (1.8 mL) was added to bring the pH to 4.0. Naldixic Acid resistant *Salmonella* (provided by Dr. Stan Bailey, USDA/ARS, Athens, Georgia) (initial colony count = 40,000 cfu/g) was added, and the feed solutions were incubated at 37°C for 90 min. Each sample was diluted with 6 mL H₂O, plated, and counted the following day. Colony counts are reported in **Table 11** below.

| **Table 11** | | | | | |
|---|---|---|---|---|---|
| Effect of formic, butyric or lactic acids on *Salmonella* populations in feed [Δ log = logₛₐₘₚₗₑ - log_{control}] | | | | | |
| **Acid** | **g/L** | **vol. (µL)** | **final pH** | **log cfu/g** | **Δ log** |
| control | | | 4.47 | 5.0 | - |
| formic | 2.5 | 10 | 4.28 | 4.3 | 0.7 |
| | 5.0 | 20 | 4.18 | 3.6 | 1.4 |
| | 7.5 | 30 | 4.1 | 1.0 | 4.0 |
| | 10 | 40 | 4 | 1.0 | 4.0 |
| butyric | 10 | 40 | 4.31 | 4.3 | 0.7 |
| | 30 | 120 | 4.17 | 1.0 | 4.0 |
| | 50 | 200 | 4.04 | 1.0 | 4.0 |
| lactic | 10 | 40 | 4.2 | 4.1 | 0.9 |
| | 30 | 120 | 3.92 | 1.0 | 4.0 |
| | 50 | 200 | 3.68 | 1.0 | 4.0 |
| control | | | 4.44 | | |

Complete bacteriacide was seen at the two highest doses tested for all three acids (7.5 and 10 g/L for formic acid; 30 and 50 g/L for butyric and lactic acids).

### EXAMPLE 10

Following the procedure set forth in **Example 9,** the effect of blends of formic, butyric and/or lactic acids, with and without Alimet^{®}, on *Salmonella* counts in basal corn soy based broiler starter feed (described in **Table 9,** above, crumble feed with 6% MBM) was studied. The blends studied are described in **Table 12,** and the results obtained in the in vitro study are reported in **Tables 13-15.**

| **Table 12** | | | | |
|---|---|---|---|---|
| Acid blend formulations (concentrations reported in g/L) | | | | |
| **Blend** | **Formic Acid** | **Lactic Acid** | **Butyric Acid** | **Alimet**^{®} |
| A1 | 5 | - | - | - |
| A2 | 4 | 4 | - | - |
| A3 | 4 | - | 4 | - |
| A4 | 3 | - | 8 | - |
| A5 | 3 | 4 | 4 | - |
| A6 | 3 | 8 | - | - |
| A7 | 2 | - | 12 | - |
| A8 | 2 | 4 | 8 | - |
| A9 | 2 | 8 | 4 | - |
| A10 | 2 | 12 | - | - |
| A11 | 1 | - | 16 | - |
| A12 | 1 | 4 | 12 | - |
| A13 | 1 | 8 | 8 | - |
| A14 | 1 | 12 | 4 | - |
| A15 | 1 | 16 | - | - |
| A16 | - | - | 20 | - |
| A17 | - | 4 | 16 | - |
| A18 | - | 8 | 12 | - |
| A19 | - | 12 | 8 | - |
| A20 | - | 16 | 4 | - |
| A21 | - | 20 | - | - |
| A22 | 5 | - | - | 1 |
| A23 | 4 | 4 | - | 1 |
| A24 | 4 | - | 4 | 1 |
| A25 | 3 | - | 8 | 1 |
| A26 | 3 | 4 | 4 | 1 |
| A27 | 3 | 8 | - | 1 |
| A28 | 2 | - | 12 | 1 |
| A29 | 2 | 4 | 8 | 1 |
| A30 | 2 | 8 | 4 | 1 |
| A31 | 2 | 12 | - | 1 |
| A32 | 1 | - | 16 | 1 |
| A33 | 1 | 4 | 12 | 1 |
| A34 | 1 | 8 | 8 | 1 |
| A35 | 1 | 12 | 4 | 1 |
| A36 | 1 | 16 | - | 1 |
| A37 | - | - | 20 | 1 |
| A38 | - | 4 | 16 | 1 |
| A39 | - | 8 | 12 | 1 |
| A40 | - | 12 | 8 | 1 |
| A41 | - | 16 | 4 | 1 |
| A42 | - | 20 | - | 1 |
| A43 | 5 | - | - | 2.27 |
| A44 | 4 | 4 | - | 2.27 |
| A45 | 4 | - | 4 | 2.27 |
| A46 | 3 | - | 8 | 2.27 |
| A47 | 3 | 4 | 4 | 2.27 |
| A48 | 3 | 8 | - | 2.27 |
| A49 | 2 | - | 12 | 2.27 |
| A50 | 2 | 4 | 8 | 2.27 |
| A51 | 2 | 8 | 4 | 2.27 |
| A52 | 2 | 12 | - | 2.27 |
| A53 | 1 | - | 16 | 2.27 |
| A54 | 1 | 4 | 12 | 2.27 |
| A55 | 1 | 8 | 8 | 2.27 |
| A56 | 1 | 12 | 4 | 2.27 |
| A57 | 1 | 16 | - | 2.27 |
| A58 | - | - | 20 | 2.27 |
| A59 | - | 4 | 16 | 2.27 |
| A60 | - | 8 | 12 | 2.27 |
| A61 | - | 12 | 8 | 2.27 |
| A62 | - | 16 | 4 | 2.27 |
| A63 | - | 20 | - | 2.27 |

| **Table 13** | | | |
|---|---|---|---|
| Effect of formic/butyric/lactic blends without Alimet^{®} on *Salmonella* populations in feed | | | |
| **Blend** | **Final pH** | **log cfu_{/}g** | **Δ log reduction** |
| A1 | 4.12 | 3.1 | 1.6 |
| A2 | 4.13 | 2.9 | 1.8 |
| A3 | 4.18 | 3.1 | 1.6 |
| A4 | 4.18 | 3.0 | 1.7 |
| A5 | 4.18 | 3.2 | 1.5 |
| A6 | 4.15 | 2.6 | 2.1 |
| A7 | 4.15 | 2.8 | 1.9 |
| A8 | 4.18 | 2.8 | 1.9 |
| A9 | 4.16 | 2.5 | 2.2 |
| A10 | 4.12 | 1.8 | 2.9 |
| All | 4.16 | 2.7 | 2.0 |
| A12 | 4.17 | 2.7 | 2.0 |
| A13 | 4.16 | 2.8 | 1.9 |
| A14 | 4.14 | 2.9 | 1.8 |
| A15 | 4.1 | 2.6 | 2.1 |
| A16 | 4.16 | 2.7 | 2.0 |
| A17 | 4.21 | 2.7 | 2.0 |
| A18 | 4.18 | 2.5 | 2.2 |
| A19 | 4.16 | 1.7 | 3.0 |
| A20 | 4.13 | 2.7 | 2.0 |
| A21 | 4.05 | 1.8 | 2.9 |
| control | 4.33 | 4.7 | - |

| **Table 14** | | | |
|---|---|---|---|
| Effect of formic/butyric/lactic blends with 1 g/L added Alimet^{®} on *Salmonella* populations in feed | | | |
| **Blend** | **Final pH** | **log cfu_{/}g** | Δ **log reduction** |
| A22 | 4.09 | 3.5 | 1.0 |
| A23 | 4.09 | 2.1 | 2.4 |
| A24 | 4.09 | 2.9 | 1.6 |
| A25 | 4.12 | 2.2 | 2.3 |
| A26 | 4.11 | 2.3 | 2.2 |
| A27 | 4.1 | 1.9 | 2.6 |
| A28 | 4.11 | 2.3 | 2.2 |
| A29 | 4.14 | 2.3 | 2.2 |
| A30 | 4.1 | 1.9 | 2.6 |
| A31 | 4.06 | 1.6 | 2.9 |
| A32 | 4.15 | 2.4 | 2.1 |
| A33 | 4.15 | 2.3 | 2.2 |
| A34 | 4.15 | 1.4 | 3.1 |
| A35 | 4.11 | 1.7 | 2.8 |
| A36 | 4.06 | 1.8 | 2.7 |
| A37 | 4.13 | 2.0 | 2.5 |
| A38 | 4.16 | 2.0 | 2.5 |
| A39 | 4.13 | 1.8 | 2.7 |
| A40 | 4.12 | 1.8 | 2.7 |
| A41 | 4.08 | 1.7 | 2.8 |
| A42 | 4.06 | 1.7 | 2.8 |
| control | 4.33 | 4.7 | 0.2 |
| control | 4.36 | 4.5 | - |

| **Table 15** | | | |
|---|---|---|---|
| Effect of formic/butyric/lactic blends with 2.27 g/L added Alimet^{®} on *Salmonella* populations in feed | | | |
| **Blend** | **Final pH** | **log cfu/g** | **Δ log reduction** |
| A43 | 4.21 | 2.8 | 0.7 |
| A44 | 4.17 | 2.8 | 0.7 |
| A45 | 4.18 | 3.0 | 0.5 |
| A46 | 4.18 | 2.8 | 0.7 |
| A47 | 4.15 | 3.7 | -0.2 |
| A48 | 4.11 | 2.0 | 1.5 |
| A49 | 4.19 | 2.7 | 0.8 |
| A50 | 4.19 | 2.8 | 0.7 |
| A51 | 4.16 | 2.8 | 0.7 |
| A52 | 4.13 | 2.4 | 1.1 |
| A53 | 4.2 | 2.8 | 0.7 |
| A54 | 4.2 | 2.7 | 0.8 |
| A55 | 4.14 | 2.3 | 1.2 |
| A56 | 4.13 | 1.7 | 1.8 |
| A57 | 4.08 | 1.0 | 2.5 |
| A58 | 4.21 | 2.3 | 1.2 |
| A59 | 4.23 | 2.7 | 0.8 |
| A60 | 4.17 | 2.0 | 1.5 |
| A61 | 4.14 | 2.0 | 1.5 5 |
| A62 | 4.12 | 0.7 | 2.8 |
| A63 | 4.07 | 0.7 | 2.8 |
| control | 4.37 | 3.5 | 0 |
| control | 4.45 | 3.5 | - |

Addition of 1 g/L Alimet^{®} to the blend gave improved results in sixteen of the blends tested.

The formulations of the blends used in **Examples 11-13** are set forth in **Table 16.**

| **Table 16** | | | | | | |
|---|---|---|---|---|---|---|
| Organic acid/Alimet^{®} blend formulations | | | | | | |
| Blend | Alimet^{®} | Phos.¹ | Butyric | Formic | Lactic | Prop.² |
| A64 | 30 | 30 | 20 | - | 20 | - |
| A65 | 30 | - | - | 50 | - | 20 |
| A66 | 20 | 20 | 12 | 30 | 18 | - |
| A67 | 10 | 10 | - | 75 | - | 5 |
| A68 | 30 | 35 | 15 | - | 20 | - |
| A69 | 30 | 5 | - | 55 | - | 10 |
| A70 | 20 | 20 | 12 | - | 18 | 30 |
| A71 | 10 | 5 | 5 | 75 | - | 5 |
| A72 | - | - | - | 50 | - | 50 |
| A73 | - | - | - | 75 | - | 25 |
| ¹ Phosphoric acid | | | | | | |
| ² Propionic acid | | | | | | |

### EXAMPLE 11

The effects of blends of organic acids on the colony counts of Salmonella in a corn soy based diet as set forth in **Table 9**, above, (DLM at 0.2%) were studied, following the procedure outlined in **Example 9**. The results are reported in **Table 17**.

| **Table 17** | | | | | |
|---|---|---|---|---|---|
| effect of acid blends on *Salmonella* populations in corn soy based diet | | | | | |
| **Blend** | **g/kg** | **after 60 min.** | | | |
| | | **cfu/g^{1.2}** | **log cfu/g** | **Δ log reduction** | |
| control | | 40,000 | 4.6 | - | |
| A64 | 5 | 29,700 | 4.5 | 0.1 | |
| | 10 | 2,300 | 3.4 | 1.2 | |
| A65 | 5 | 3,100 | 3.5 | 1.1 | |
| | 10 | 40 | 1.6 | 3.0 | |
| A66 | 5 | 10,000 | 4.0 | 0.6 | |
| | 10 | 40 | 1.6 | 3.0 | |
| A67 | 5 | 3,000 | 3.5 | 1.1 | |
| | 10 | 40 | 1.6 | 3.0 | |
| control | | 13,900 | 4.1 | - | |

| **Blend** | **g/kg** | **after 90 min.** | | | **final pH** |
|---|---|---|---|---|---|
| | | **cfu/g^{1.2}** | **log cfu/g** | **Δ log reduction** | |
| control | | 46,000 | 4.7 | - | 4.68 |
| A64 | 5 | 19,300 | 4.3 | 0.4 | 4.45 |
| | 10 | 2,400 | 3.4 | 1.3 | 4.32 |
| A65 | 5 | 200 | 2.3 | 2.4 | 4.44 |
| | 10 | 40 | 1.6 | 3.1 | 4.25 |
| A66 | 5 | 13,500 | 4.1 | 0.6 | 4.37 |
| | 10 | 40 | 1.6 | 3.1 | 4.22 |
| A67 | 5 | 200 | 2.3 | 2.4 | 4.33 |
| | 10 | 40 | 1.6 | 3.1 | 4.02 |
| control | | 38,800 | 4.6 | - | 4.68 |
| ¹40 cfu/g (minimum detection level) reported when no *Salmonella* detected. | | | | | |
| ² Single reading for each treatment. | | | | | |

Three of the four blends tested showed complete bacteriacide at 10 g/kg (1%) application. Both the A65 and A67 blends showed significant bacteriacide at the lower application rate (0.5%)

### EXAMPLE 12

The effect of blends of organic acids on *Salmonella* counts were studied using model poultry and swine diets. Blends A70 and A71 were tested using the corn soy based diet set forth in **Table 9,** above, with DLM added at 0.2%. The model poultry diet was a corn soy based layer diet, no meat product; the effects of blends A68 and A69 were tested with this diet.

Blends were added to 1 g of feed sample. *Salmonella* (200 µL, 40,000 cfu) were added to each feed sample, and mixed. The samples were incubated at room temperature, then diluted 1:10 with water and plated on BG plate. Results are reported in **Table 18.**

| **Table 18** | | | | | | |
|---|---|---|---|---|---|---|
| effect of acid blends on *Salmonella* populations in corn soy based diet | | | | | | |
| **blend** | **g/kg** | **Final pH** | **after 1 h** | | **after 24 h** | |
| | | | **cfu/g** | **log cfu/g** | **cfu/g** | **log cfu/g** |
| control (Diet #1) | | 5.83 | 12,400 | 4.1 | 10,133 | 4.0 |
| A70 | 2 | 5.53 | 15,000 | 4.2 | 3,300 | 3.5 |
| | 5 | 5.32 | 3,900 | 3.6 | 1,200 | 3.1 |
| | 7.5 | 5.08 | 3,400 | 3.5 | 700 | 2.8 |
| | 10 | 4.94 | 1,500 | 3.2 | 100 | 2.0 |
| A71 | 2 | 5.42 | 9,600 | 4.0 | 2,300 | 3.4 |
| | 5 | 5.16 | 1,300 | 3.1 | 100 | 2.0 |
| | 7.5 | 4.84 | 200 | 2.3 | 100 | 2.0 |
| | 10 | 4.66 | 100 | 2.0 | 100 | 2.0 |
| control (Diet #2) | | 5.92 | 15,300 | 4.2 | 6,300 | 3.8 |
| A68 | 2 | 5.70 | 10,400 | 4.0 | 5,600 | 3.7 |
| | 5 | 5.67 | 6,300 | 3.8 | 4,200 | 3.6 |
| | 7.5 | 5.54 | 9,900 | 4.0 | 2,600 | 3.4 |
| | 10 | 5.36 | 8,300 | 3.9 | 1,300 | 3.1 |
| A69 | 2 | 5.53 | 7,800 | 3.9 | 3,300 | 3.5 |
| | 5 | 5.29 | 3,600 | 3.6 | 1,200 | 3.1 |
| | 7.5 | 5.22 | 1,200 | 3.1 | 300 | 2.5 |
| | 10 | 5.08 | 1,000 | 3.0 | 100 | 2.0 |

### EXAMPLE 13

The antibacterial effect of two organic acid/Alimet^{®} blends were compared with blends containing formic and propionic acids, and with no Alimet^{®}, following the procedure set forth in Example 12. Results after 90 minutes are reported in **Table 19.**

| **Table 19** | | | | |
|---|---|---|---|---|
| **Blend** | **g/kg** | **cfu/g** | **log cfu/g** | **final pH** |
| control | | 29,400 | 4.5 | 4.54 |
| A65 | 2 | 140 | 2.1 | 4.56 |
| | 5 | 80 | 1.9 | 4.45 |
| | 10 | 1 | 0 | 4.32 |
| A67 | 2 | 900 | 3.0 | 4.57 |
| | 5 | 1,100 | 3.0 | 4.49 |
| | 10 | 1 | 0 | 4.25 |
| A72 | 2 | 2,100 | 3.3 | 4.5 |
| | 5 | 90 | 2 | 4.39 |
| | 10 | 1 | 0 | 4.15 |
| A73 | 2 | 2,700 | 3.4 | 4.51 |
| | 5 | 600 | 2.8 | 4.4 |
| | 10 | 1 | 0 | 4.1 |
| control | | 30,650 | 4.5 | 4.68 |

### Comparative EXAMPLE 14

The antibacterial effect of two different batches of Alimet^{®} on a corn soy diet (see **Table 9,** above) were compared. The first batch was of an unknown age and the second batch was freshly prepared (less than two weeks old). The protocol set forth in **Example 9** was used, and results are reported in **Table 20.**

| **Table 20** | | | | |
|---|---|---|---|---|
| effect of two different batches of Alimet^{®} on *Salmonella* populations in corn soy based diet after 90 min. incubation | | | | |
| **Acid** | **g/kg added** | **cfu/g** | **log cfu/g** | **pH** |
| control | | 6,850 | 3.8 | 4.80 |
| Alimet^{®} batch 1 | 2.3 | 800 | 2.9 | 4.72 |
| | 5.7 | 50 | 1.7 | 4.66 |
| | 8.5 | 120 | 2.1 | 4.58 |
| | 11.4 | 0 | - | 4.57 |
| Alimet^{®} batch 2 | 2.3 | 3,900 | 3.6 | 4.68 |
| | 5.7 | 300 | 2.5 | 4.54 |
| | 8.5 | 20 | 1.3 | 4.61 |
| | 11.4 | 20 | 1.3 | 4.57 |
| control | | 14,850 | 4.2 | 4.80 |

The first batch of Alimet^{®} showed slightly improved bactericidal effects at lower concentrations. Both batches were bactericidal at higher doses.

### Comparative EXAMPLE 15

The antibacterial effect of dry acids (fumaric, tartaric, and sorbic) alone and in combination with Alimet^{®} blends were studied according to the protocol of **Example 9.** The formulations of the blends studied are reported in **Table 21.** The results after 90 minutes are reported in **Table 22.**

| **Table 21** | | | | |
|---|---|---|---|---|
| **Blend** | **acid concentration (g/kg₎** | | | |
| | **Alimet^{®}** | **Fumaric** | **Tartaric** | **Sorbic** |
| A74 | 10 | 0 | 0 | 0 |
| A75 | 0 | 10 | 0 | 0 |
| A76 | 0 | 0 | 10 | 0 |
| A77 | 0 | 0 | 0 | 10 |
| A78 | 5 | 5 | 0 | 0 |
| A79 | 5 | 0 | 5 | 0 |
| A80 | 5 | 0 | 0 | 5 |

| **Table 22** | | | |
|---|---|---|---|
| **Blend** | **cfu/g** | **log cfu/g** | **Δ log reduction** |
| control | 27900 | 4.4 | |
| A74 | 40 | 1.6 | 2.8 |
| A75 | 30 | 1.5 | 3.0 |
| A76 | 14450 | 4.2 | 0.3 |
| A77 | 1150 | 3.1 | 1.4 |
| A78 | 0 | - | 4.4 |
| A79 | 4600 | 3.7 | 0.8 |
| A80 | 170 | 2.2 | 2.2 |
| control | 13900 | 4.1 | |

### Comparative EXAMPLE 16

The effect of formic acid on *Lactobacillus plantarum* was studied. As demonstrated in **Example 1,** addition of Alimet^{®} at pH 3.5 to a bacteria-containing broth showed a clear lethal effect on *L. plantarum* at doses of 3 and 5 g/l. Comparable concentrations of formic acid (technical quality 85%, ex Franklin Products) were also studied and compared against Alimet^{®}.

Fresh overnight culture *L. plantarum* in Brain Heart Infusion broth is used to inoculate medium 5 at a log 4.1 cfu/mL at pH 3.5. The tubes are incubated under oxygen reduced atmosphere for 6 hours at 37°C. Colony counts are performed according standard procedures. All analyses were performed in duplicate, and the results are reported in **Table 23.**

| **Table 23** | | | |
|---|---|---|---|
| Effect of Alimet^{®} and formic acid on *L. plantarum* colony counts in broth (after 6 hours) | | | |
| initial log cfu/mL = 5.61 Δ log = log_{6 hours} - logᵢₙᵢₜᵢₐₗ | | | |
| **Acid** | **g/kg** | **log cfu/mL** | Δ **log** |
| control | | 5.67 | 0.06 |
| Alimet^{®} | 3 | 3.02 | -2.59 |
| | 5 | 0.83 | -4.78 |
| formic acid | 3 | 3.19 | -2.42 |
| | 5 | -0.30 | -5.91 |

### Comparative EXAMPLE 17

Blends of various acids with Alimet^{®} were studied at pH 4.5. The effect of these blends on *S. enteritidis* colony counts in broth were studied, using the protocol set out in **Example 1.** Results are reported in **Tables 24-26.**

| **Table 24** | | | | |
|---|---|---|---|---|
| Effects of blends of acids and Alimet^{®} on *S. enteritidis* colony counts in broth | | | | |
| **Blend** | **Acid** | **Acid g/L** | **Alimet^{®} g/L** | **log cfu/mL** |
| Control | | | | 5.04 |
| Control (Alimet^{®}) | | | | -0.30 |
| A81 | formic | 5 | 0 | 3.93 |
| A82 | | 4.5 | 0.5 | 0.74 |
| A83 | | 4 | 1 | 0.24 |
| A84 | | 3.75 | 1.25 | 0.15 |
| A85 | | 3.5 | 1.5 | -0.15 |
| A86 | | 2.5 | 2.5 | -0.30 |
| A87 | butyric | 5 | 0 | 4.44 |
| A88 | | 4.5 | 0.5 | 3.56 |
| A89 | | 4 | 1 | 1.70 |
| A90 | | 3.75 | 1.25 | 1.44 |
| A91 | | 3.5 | 1.5 | -0.15 |
| A92 | | 2.5 | 2.5 | -0.30 |
| A93 | citric | 5 | 0 | 4.74 |
| A94 | | 4.5 | 0.5 | 4.40 |
| A95 | | 4 | 1 | 4.34 |
| A96 | | 3.75 | 1.25 | 1.59 |
| A97 | | 3.5 | 1.5 | 1.19 |
| A98 | | 2.5 | 2.5 | 0.24 |

| **Table 25** | | | | |
|---|---|---|---|---|
| Effects of blends of acids or formaldehyde and Alimet^{®} on *S. enteritidis* colony counts in broth | | | | |
| **Blend** | **Acid** | **Acid g/L** | **Alimet® g/L** | **log cfu/mL** |
| Control | | | | 5.02 |
| Control (Alimet^{®}) | | | | 0.00 |
| A99 | fumaric | 5 | 0 | 4.68 |
| A100 | | 4.5 | 0.5 | 4.65 |
| A101 | | 4 | 1 | 4.43 |
| A102 | | 3.75 | 1.25 | 4.38 |
| A103 | | 3.5 | 1.5 | 4.36 |
| A104 | | 2.5 | 2.5 | 2.32 |
| A105 | lactic | 5 | 0 | 4.44 |
| A106 | | 4.5 | 0.5 | 4.48 |
| A107 | | 4 | 1 | 4.43 |
| A108 | | 3.75 | 1.25 | 4.51 |
| A109 | | 3.5 | 1.5 | 4.75 |
| A110 | | 2.5 | 2.5 | 4.55 |
| A111 | malic | 5 | 0 | 5.01 |
| A112 | | 4.5 | 0.5 | 4.71 |
| A113 | | 4 | 1 | 4.77 |
| A114 | | 3.75 | 1.25 | 4.91 |
| A115 | | 3.5 | 1.5 | 4.96 |
| A116 | | 2.5 | 2.5 | 4.89 |

| **Table 26** | | | | |
|---|---|---|---|---|
| Effects of blends of acids or formaldehyde and Alimet^{®} on *S. enteritidis* colony counts in broth | | | | |
| **Blend** | **Acid** | **Acid g/L** | **Alimet^{®} g/L** | **log cfu/mL** |
| Control | | | | 4.95 |
| Control (Alimet^{®}) | | | | 0.63 |
| A117 | propionic | 5 | 0 | 4.34 |
| A118 | | 4.5 | 0.5 | 4.34 |
| A119 | | 4 | 1 | 4.10 |
| A120 | | 3.75 | 1.25 | 3.76 |
| A121 | | 3.5 | 1.5 | 3.30 |
| A122 | | 2.5 | 2.5 | 0.87 |
| A123 | phosphoric | 5 | 0 | 4.68 |
| A124 | | 4.5 | 0.5 | 4.67 |
| A125 | | 4 | 1 | 4.56 |
| A126 | | 3.75 | 1.25 | 4.62 |
| A127 | | 3.5 | 1.5 | 4.48 |
| A128 | | 2.5 | 2.5 | 3.30 |
| A129 | formaldehyde | 5 | 0 | -0.30 |
| A130 | | 4.5 | 0.5 | -0.30 |
| A131 | | 4 | 1 | -0.30 |
| A132 | | 3.75 | 1.25 | -0.30 |
| A133 | | 3.5 | 1.5 | -0.30 |
| A134 | | 2.5 | 2.5 | -0.30 |

Phosphoric, fumaric, lactic, malic and propionic acids do not show a significant inhibitory effect at 5 g/l. Blends of these acids with Alimet^{®} gave similar results, except for the 50:50 blend of fumaric and Alimet^{®}, which gave greater than 2 log reduction in colony counts compared to 5 g/L of fumaric alone, and the 50:50 blend of phosphoric and Alimet^{®}, which gave an approximately 1.3 log reduction compared to 5 g/L of phosphoric alone.

Blends of formic acid and Alimet^{®} performed more favorably than formic acid alone for all the blends studied. Similarly, blends of butyric acid and Alimet^{®}, and citric acid with Alimet^{®}, gave improved bactericidal effects with increasing proportion of Alimet^{®} added.

### EXAMPLE 18

The antibacterial effect of acid blends was studied according to the protocol of **Example 9.** Phosphoric acid (75%) was obtained from Astaris (St. Louis, MO), lot # TK60. L-lactic acid (80%) was obtained from Purac America (Lincolnshire, IL), batch # 015703-A. Butyric acid (99+%) was obtained from Aldrich Chemical Co. (Milwaukee, WI), batch # 0.5110A. The formulations of the blends studied are reported in **Table 27.** The results are reported in **Table 28.**

| **Table 27** | | | | |
|---|---|---|---|---|
| **Blend** | **acid formulations (% of total)** | | | |
| | **Alimet^{®}** | **Lactic** | **Phosphoric** | **Butyric** |
| A135 | 0.33 | 0.67 | - | - |
| A136 | 0.317 | 0.633 | 0.05 | - |
| A137 | 0.267 | 0.533 | 0.20 | - |
| A138 | 0.25 | 0.50 | 0.25 | - |
| A139 | 0.33 | 0.33 | - | 0.33 |
| A140 | 0.317 | 0.317 | 0.05 | 0.317 |
| A141 | 0.267 | 0.267 | 0.20 | 0.267 |
| A142 | 0.25 | 0.25 | 0.25 | 0.25 |
| A143 | 0.33 | - | - | 0.67 |
| A144 | 0.317 | - | 0.05 | 0.633 |
| A145 | 0.267 | - | 0.20 | 0.533 |
| A146 | 0.25 | - | 0.25 | 0.50 |

| **Table 28** | | | |
|---|---|---|---|
| **Blend** | **cfu/g** | **log cfu/g** | **final pH** |
| control | 7,900 | 3.9 | 4.86 |
| A135 | 20 | 1.3 | 4.49 |
| A136 | 20 | 1.3 | 4.39 |
| A137 | 340 | 2.5 | 4.52 |
| A138 | 160 | 2.2 | 4.44 |
| A139 | 80 | 1.9 | 4.50 |
| A140 | 20 | 1.3 | 4.49 |
| A141 | 160 | 2.2 | 4.42 |
| A142 | 160 | 2.2 | 4.43 |
| A143 | 160 | 2.2 | 4.48 |
| A144 | 40 | 1.6 | 4.48 |
| A145 | 240 | 2.4 | 4.53 |
| A146 | 20 | 1.3 | 4.42 |
| control | 22,100 | 4.3 | 4.73 |

### EXAMPLE 19

The effects of blend A71 at neutral pH were tested. The blend was added to 1 g of feed sample. *Salmonella* (40,000 cfu (65ul)) was added to each 1 g sample, mixed, and incubated at room temperature. Following incubation, samples were diluted 1:10 with water and plated on a BG plate.

Two diets were studied, as shown in **Table 29.** Results are reported in **Table 30.**

| **Table 29** | |
|---|---|
| **Diet 1 (swine diet)** | |
| **ingredients** | **% of total** |
| corn | 51.60 |
| SBM, 48 | 30 |
| DairyLac 80 | 8.50 |
| Menhaden fish meal (Select) | 3.98 |
| Choice white grease | 3.00 |
| Dicalcium Phosphate | 1.24 |
| Limestone | 0.34 |
| Lysine | 0.26 |
| DL-Methionine | 0.13 |
| Threonine | 0.16 |
| Vitamins, TMs, Salt and Mecadox | 0.93 |
| Corn Starch | to 100 |

| **Diet 2 (broiler diet)** | |
|---|---|
| **ingredients** | **% of total** |
| corn | 60.551 |
| SBM | 32.254 |
| Fat, animal | 3.665 |
| Dicalcium Phosphate | 1.861 |
| Limestone | 0.811 |
| Vitamin/Mineral premix | 0.350 |
| Salt | 0.340 |
| L-lysine HCl 78% | 0.097 |
| Threonine | 0.051 |
| Satoquin-mix6 | 0.019 |
| Copper Sulfate | 0.003 |
| DL-methionine | 0.2 |

| **Table 30** | | | | | | | |
|---|---|---|---|---|---|---|---|
| Blend tested: A71 | | | | | | | |
| **g/kg** | **1 hour** | | **24 hours** | | **48 hours** | | **final pH** |
| | **cfu/g** | **log** | **cfu/g** | **log** | **cfu/g** | **log** | |
| **Diet 1** | | | | | | | |
| control | 27,700 | 4.4 | 6,432 | 3.8 | 2,530 | 3.4 | 5.83 |
| 2 | 4,320 | 3.6 | 80 | 1.9 | 40 | 1.6 | 5.52 |
| 5 | 3,840 | 3.6 | 40 | 1.6 | 0 | - | 5.21 |
| 7.5 | 3,080 | 3.5 | 80 | 1.9 | 0 | - | 5.01 |
| 10 | 1,560 | 3.2 | 0 | - | 0 | - | 4.87 |

| **Diet 2** | | | | | | | |
|---|---|---|---|---|---|---|---|
| control | 25,000 | 4.4 | 6,160 | 3.8 | 2,570 | 3.4 | 6.06 |
| 2 | 8,080 | 3.9 | 40 | 1.6 | 40 | 1.6 | 5.67 |
| 5 | 7,000 | 3.8 | 40 | 1.6 | 40 | 1.6 | 5.31 |
| 7.5 | 4,400 | 3.6 | 40 | 1.6 | 0 | - | 5.1 |
| 10 | 900 | 3.0 | 0 | - | 0 | - | 4.82 |

### EXAMPLE 20

Following the protocol of **Example 19,** the effects of blend A69 at neutral pH were tested. Formic acid (85%) was obtained from BASF Corporation (Mt. Olive, NJ), product # 019723, lot # 87656216KO. Two diets were studied, as shown in **Table 31.** Results are reported in **Table 32.**

| **Table 31** | |
|---|---|
| **Diet 3** | |
| **ingredients** | **% of total** |
| soybean meal | 33.40 |
| corn | 32.85 |
| wheat hard red | 20.00 |
| organic peas meal | 5.00 |
| fat, animal | 4.80 |
| dicalcium phophate | 1.81 |
| limestone | 0.98 |
| salt | 0.43 |
| Vitamin/Mineral premix | 0.35 |
| Threonine | 0.10 |
| Avizyme1502 | 0.10 |
| Santoquin-mix6 | 0.02 |
| Coban 60 | 0.05 |
| copper sulfate | 0.00 |

| **Diet 4** | |
|---|---|
| **ingredients** | **% of total** |
| corn | 60.50 |
| soybean meal | 28.46 |
| limestone | 7.76 |
| Dicalcium Phosphate | 1.63 |
| animal fat | 1.00 |
| Vitamin/Mineral premix | 0.35 |
| salt | 0.26 |
| Santoquin-mix6 | 0.02 |
| copper sulfate | 0.00 |
| choline Cl-60% | 0.00 |

| **Table 32** | | | | | | | |
|---|---|---|---|---|---|---|---|
| blend tested: A69 | | | | | | | |
| **g/kg** | **1 hour** | | **24 hours** | | **48 hours** | | **final pH** |
| | **cfu/g** | **log** | **cfu/g** | **log** | **cfu/g** | **log** | |
| **Diet 3** | | | | | | | |
| control | 68,000 | 4.8 | 2,470 | 3.4 | 880 | 2.9 | 6.05 |
| 2 | 5,600 | 3.7 | 120 | 2.1 | 40 | 1.6 | 5.67 |
| 5 | 8,900 | 3.9 | 40 | 1.6 | 40 | 1.6 | 5.46 |
| 7.5 | 4,600 | 3.7 | 40 | 1.6 | 80 | 1.9 | 5.28 |
| 10 | 10,600 | 4.0 | 40 | 1.6 | 0 | - | 5.13 |

| **Diet 4** | | | | | | | |
|---|---|---|---|---|---|---|---|
| control | 68,000 | 4.8 | 2,630 | 3.4 | 1,380 | 3.1 | 5.99 |
| 2 | 8,600 | 3.9 | 0 | - | 0 | - | 5.8 |
| 5 | 900 | 3.0 | 40 | 1.6 | 0 | - | 5.55 |
| 7.5 | 2,600 | 3.4 | 200 | 2.3 | 0 | - | 5.37 |
| 10 | 2,700 | 3.4 | 0 | - | 40 | 1.6 | 5.12 |

### EXAMPLE 21

Following the protocol of **Example 9,** the effects of blends of Alimet^{®}, lactic acid, formic acid, and/or butyric acid were studied. Blend formulations are set forth in **Table 33.** Up to five replicates were performed, and results are reported in **Tables 34** and **35.**

| **Table 33** | | | | | | | | | | |
|---|---|---|---|---|---|---|---|---|---|---|
| acid formulations (g/kg) | | | | | | | | | | |
| **Blend** | **A¹** | **L²** | **F³** | **B⁴** | | **Blend** | **A¹** | **L²** | **F³** | **B⁴** |
| A147 | 0 | 0 | 0 | 10 | | A162 | 0 | 0 | 6.7 | 3.3 |
| A148 | 2 | 0 | 0 | 8 | | A163 | 2 | 0 | 5.3 | 2.67 |
| A149 | 7.5 | 0 | 0 | 2.5 | | A164 | 7.5 | 0 | 1.67 | 0.8 |
| A150 | 3.3 | 0 | 0 | 6.7 | | A165 | 0 | 10 | 0 | 0 |
| A151 | 2 | 2.67 | 0 | 5.33 | | A166 | 2 | 8 | 0 | 0 |
| A152 | 7.5 | 0.8 | 0 | 1.67 | | A167 | 7.5 | 2.5 | 0 | 0 |
| A153 | 0 | 0 | 3.3 | 6.7 | | A168 | 0 | 6.7 | 3.3 | 0 |
| A154 | 2 | 0 | 2.67 | 5.3 | | A169 | 2 | 5.3 | 2.67 | 0 |
| A155 | 7.5 | 0 | 0.8 | 1.67 | | A170 | 7.5 | 1.67 | 0.8 | 0 |
| A156 | 0 | 6.7 | 0 | 3.3 | | A171 | 0 | 3.3 | 6.7 | 0 |
| A157 | 2 | 5.3 | 0 | 2.67 | | A172 | 2 | 2.67 | 5.3 | 0 |
| A158 | 7.5 | 1.67 | 0 | 0.8 | | A173 | 7.5 | 0.8 | 1.67 | 0 |
| A159 | 0 | 3.3 | 3.3 | 3.3 | | A174 | 0 | 0 | 10 | 0 |
| A160 | 2 | 2.67 | 2.67 | 2.67 | | A175 | 2 | 0 | 8 | 0 |
| A161 | 7.5 | 0.8 | 0.8 | 0.8 | | A176 | 7.5 | 0 | 2.5 | 0 |
| ¹ Alimet^{®} | | | | | | | | | | |
| ² Lactic acid | | | | | | | | | | |
| ³ Formic acid | | | | | | | | | | |
| ⁴ Butyric acid | | | | | | | | | | |

| **Table 34** | | | | | | | |
|---|---|---|---|---|---|---|---|
| **Trial:** | **Average** | | | **1** | **2** | **3** | **4** |
| **Blend** | **cfu/g** | **log** | Δ **log** | **cfu/g** | **cfu/g** | **cfu/g** | **cfu/g** |
| control | 49,200 | 4.7 | - | 58,200 | 43,400 | 46,000 | N/A |
| A147 | 18,800 | 4.3 | 0.4 | 22,200 | 15,400 | N/A | N/A |
| A148 | 15,700 | 4.2 | 0.5 | 19,800 | 11,600 | N/A | N/A |
| A149 | 70 | 1.8 | 2.8 | 80 | 200 | 0 | 0 |
| A150 | 12,300 | 4.1 | 0.6 | 1,200 | 23,400 | N/A | N/A |
| A151 | 6,000 | 3.8 | 0.9 | 8,200 | 3,800 | N/A | N/A |
| A152 | 60 | 1.8 | 2.9 | 40 | 40 | 120 | 40 |
| A153 | 1,600 | 3.2 | 1.5 | 3,200 | 0 | N/A | N/A |
| A154 | 20 | 1.3 | 3.4 | 40 | 40 | 0 | 0 |
| A155 | 10 | 1.0 | 3.7 | 40 | 0 | 0 | 0 |
| A156 | 11,300 | 4.1 | 0.6 | 6,000 | 16,600 | N/A | N/A |
| A157 | 2,900 | 3.5 | 1.2 | 1,000 | 4,800 | N/A | N/A |
| A158 | 400 | 2.6 | 2.1 | 800 | 0 | N/A | N/A |
| A159 | 0 | - | 4.7 | 0 | 0 | 0 | 0 |
| A160 | 0 | - | 4.7 | 0 | 0 | 0 | 0 |
| A161 | 20 | 1.3 | 3.4 | 40 | 40 | 0 | 0 |
| control | 63,133 | 4.8 | - | 56,800 | 64,000 | 68,600 | N/A |
| N/A = replicate not performed | | | | | | | |

| **Table 35** | | | | | | | |
|---|---|---|---|---|---|---|---|
| **Trial:** | **Average** | | | **1** | **2** | **3** | **4** |
| **Blend** | **cfu/g** | **log** | Δ **log** | **cfu/g** | **cfu/g** | **cfu/g** | **cfu/g** |
| control | 25,666 | 4.4 | - | 23,200 | 25,800 | 28,000 | N/A |
| A162 | 0 | - | 4.4 | 0 | 0 | 0 | 0 |
| A163 | 0 | - | 4.4 | 0 | 0 | 0 | 0 |
| A164 | 0 | - | 4.4 | 0 | 0 | 0 | 0 |
| A165 | 5,100 | 3.7 | 0.7 | 4,000 | 6,200 | N/A | N/A |
| A166 | 150 | 2.2 | 2.2 | 120 | 120 | 120 | 240 |
| A167 | 30 | 1.5 | 2.9 | 40 | 80 | 0 | 0 |
| A168 | 0 | - | 4.4 | 0 | 0 | 0 | 0 |
| A169 | 0 | - | 4.4 | 0 | 0 | 0 | 0 |
| A170 | 0 | - | 4.4 | 0 | 0 | 0 | 0 |
| A171 | 0 | - | 4.4 | 0 | 0 | 0 | 0 |
| A172 | 0 | - | 4.4 | 0 | 0 | 0 | 0 |
| A173 | 0 | - | 4.4 | 0 | 0 | 0 | 0 |
| A174 | 0 | - | 4.4 | 0 | 0 | 0 | 0 |
| A175 | 0 | - | 4.4 | 0 | 0 | 0 | 0 |
| A176 | 0 | - | 4.4 | 0 | 0 | 0 | 0 |
| control | 20000 | 4.3 | - | 20200 | 19800 | N/A | N/A |
| N/A = replicate not performed | | | | | | | |

### EXAMPLE 22

Following the protocol of **Example 9,** the effects of blends of Alimet^{®}, lactic acid, propionic acid (99%, obtained from Sigma Chemical Co., St. Louis, MO, lot P-1386), and/or butyric acid were studied. Blend formulations are set forth in **Table 36.** Up to five replicates were performed, and results are reported in **Tables 37** and **38.**

| **Table 36** | | | | | | | | | | |
|---|---|---|---|---|---|---|---|---|---|---|
| acid formulations (g/kg) | | | | | | | | | | |
| **Blend** | **A¹** | **L²** | **P³** | **B⁴** | | **Blend** | **A¹** | **L²** | **P³** | **B⁴** |
| A177 | 0 | 0 | 0 | 10 | | A193 | 2 | 0 | 5.3 | 2.67 |
| A178 | 2 | 0 | 0 | 8 | | A194 | 7.5 | 0 | 1.67 | 0.8 |
| A179 | 7.5 | 0 | 0 | 2.5 | | A195 | 0 | 10 | 0 | 0 |
| A180 | 0 | 3.3 | 0 | 6.7 | | A196 | 2 | 8 | 0 | 0 |
| A181 | 2 | 2.67 | 0 | 5.3 | | A197 | 7.5 | 2.5 | 0 | 0 |
| A182 | 7.5 | 0.8 | 0 | 1.67 | | A198 | 0 | 6.7 | 3.3 | 0 |
| A183 | 0 | 0 | 3.3 | 6.7 | | A199 | 2 | 5.3 | 2.67 | 0 |
| A184 | 2 | 0 | 2.67 | 5.3 | | A200 | 7.5 | 1.67 | 0.8 | 0 |
| A185 | 7.5 | 0 | 0.8 | 1.67 | | A201 | 0 | 3.3 | 6.7 | 0 |
| A186 | 0 | 6.7 | 0 | 3.3 | | A202 | 2 | 2.67 | 5.3 | 0 |
| A187 | 2 | 5.3 | 0 | 2.67 | | A203 | 7.5 | 0.8 | 1.67 | 0 |
| A188 | 7.5 | 1.67 | 0 | 0.8 | | A204 | 0 | 0 | 10 | 0 |
| A189 | 0 | 3.3 | 3.3 | 3.3 | | A205 | 2 | 0 | 8 | 0 |
| A190 | 2 | 2.67 | 2.67 | 2.67 | | A206 | 7.5 | 0 | 2.5 | 0 |
| A191 | 7.5 | 0.8 | 0.8 | 0.8 | | A207 | 10 | 0 | 0 | 0 |
| A192 | 0 | 0 | 6.7 | 3.3 | | | | | | |
| ¹ Alimet^{®} | | | | | | | | | | |
| ² Lactic acid | | | | | | | | | | |
| ³ Propionic acid | | | | | | | | | | |
| ⁴ Butyric acid | | | | | | | | | | |

| **Table 37** | | | | | | |
|---|---|---|---|---|---|---|
| **Trial:** | **Average** | | | **1** | **2** | **3** |
| **Blend** | **cfu/g** | **log** | **Δ log** | **cfu/g** | **cfu/g** | **cfu/g** |
| control | 20,067 | 4.3 | | 17,200 | 18,800 | 24,200 |
| A177 | 6,333 | 3.8 | 0.5 | 5,400 | 7,000 | 6,600 |
| A178 | 500 | 2.7 | 1.6 | 400 | 600 | N/A |
| A179 | 400 | 2.6 | 1.7 | 200 | 600 | N/A |
| A180 | 1,400 | 3.1 | 1.2 | 1,400 | 1,400 | N/A |
| A181 | 1,500 | 3.2 | 1.1 | 2,000 | 1,000 | N/A |
| A182 | 100 | 2.0 | 2.3 | 200 | 0 | N/A |
| A183 | 6,000 | 3.8 | 0.5 | 9,600 | 2,400 | N/A |
| A184 | 6,900 | 3.8 | 0.5 | 8,800 | 5,000 | N/A |
| A185 | 1,300 | 3.1 | 1.2 | 1,400 | 1,200 | N/A |
| A186 | 4,100 | 3.6 | 0.7 | 5,400 | 2,800 | N/A |
| A187 | 2,400 | 3.4 | 0.9 | 600 | 4,200 | N/A |
| A188 | 400 | 2.6 | 1.7 | 200 | 600 | N/A |
| A189 | 4,700 | 3.7 | 0.6 | 1,000 | 8,400 | N/A |
| A190 | 7,300 | 3.9 | 0.4 | 7,800 | 6,800 | N/A |
| A191 | 300 | 2.5 | 1.8 | 600 | 0 | N/A |
| control | 18,733 | 4.3 | | 20,000 | 22,800 | 13400 |
| N/A = replicate not performed | | | | | | |

| **Table 38** | | | | | | | |
|---|---|---|---|---|---|---|---|
| **Trial:** | **Average** | | | **1** | **2** | **3** | **4** |
| **Blend** | **cfu/g** | **log** | **Δ log** | **cfu/g** | **cfu/g** | **cfu/g** | **cfu/g** |
| control | 7,800 | 3.9 | - | 9,800 | 7,200 | 6,400 | N/A |
| A192 | 6,100 | 3.8 | 0.4 | 6,600 | 5,600 | N/A | N/A |
| A193 | 2,600 | 3.4 | 0.8 | 2,200 | 3,000 | N/A | N/A |
| A194 | 25 | 1.4 | 2.8 | 50 | 50 | 0 | 0 |
| A195 | 400 | 2.6 | 1.6 | 800 | 0 | N/A | N/A |
| A196 | 300 | 2.5 | 1.7 | 200 | 400 | N/A | N/A |
| A197 | 0 | - | 4.2 | 0 | 0 | 0 | 0 |
| A198 | 2,400 | 3.4 | 0.8 | 1,000 | 3,800 | N/A | N/A |
| A199 | 600 | 2.8 | 1.4 | 0 | 1,200 | N/A | N/A |
| A200 | 0 | - | 4.2 | 0 | 0 | 0 | 0 |
| A201 | 3,800 | 3.6 | 0.6 | 3,200 | 4,400 | N/A | N/A |
| A202 | 900 | 3.0 | 1.2 | 1,000 | 800 | N/A | N/A |
| A203 | 0 | - | 4.2 | 0 | 0 | 0 | 0 |
| A204 | 3,500 | 3.5 | 0.6 | 5,400 | 1,600 | N/A | N/A |
| A205 | 100 | 2.0 | 2.2 | 200 | 0 | N/A | N/A |
| A206 | 0 | - | 4.2 | 0 | 0 | 0 | 0 |
| A207 | 0 | - | 4.2 | 0 | 0 | 0 | 0 |
| control | 30,600 | 4.5 | - | 41,600 | 19,400 | 30,800 | N/A |
| N/A = replicate not performed | | | | | | | |

### Comparative EXAMPLE 23

The ability of Alimet^{®} and DLM to function as palatants for dog and cat food was studied. Alimet^{®} and DLM were added into premium-type dog and cat food in the mixer to test the acceptance of the food compared to food lacking either supplement. The food used comprised good quality protein, and was high in CP and fat. A premium palantant was also added to the food. Alimet^{®} or DLM was added into the mixer prior to extrusion. The formulation of the feline diet is described in **Table 39,** and of the canine diet in **Table 40.** The Alimet^{®}/DLM supplementation levels, and intake ratios, are described in **Table 41.** The intake ratio describes the relative incidence of selecting one food over another.

For the canine study, twenty-one dogs were used (seven small, seven medium, and seven large dogs). For the feline study, twenty mature cats were used. The animals were given two choices of food, placed in separate bowls. Over a two-day period, the dogs were given access to the food for 30 minutes; cats had access for 22 hours. The food chosen and consumed first was observed.

| **Table 39** | |
|---|---|
| Feline Diet | |
| **Ingredient** | **% of total diet** |
| Corn | 14.7 |
| Poultry byproduct (low ash) | 20 |
| Soybean Meal | 12.5 |
| Corn gluten meal | 12.2 |
| Meat and Bone meal | 4 |
| Animal fat | 11.4 |
| Rice brewer's | 19.4 |
| Flavor | 2 |
| Fish meal | 2 |
| Dried eggs | 0.5 |
| Salt | 0.5 |
| KCl | 0.5 |
| Vitamins | 0.2 |
| Choline | 0.1 |
| Taurine | 0.1 |
| Tocopherol | 0.05 |
| Trace Minerals | 0.05 |

| **Table 40** | |
|---|---|
| Canine Diet | |
| **Ingredient** | **% of total diet** |
| Corn | 33.0 |
| Barley | 15.0 |
| Poultry byproduct (low ash) | 13.0 |
| Poultry byproduct | 12.0 |
| Soybean Meal | 9.0 |
| Animal fat | 8.0 |
| Rice brewer's | 5.0 |
| Flavor | 2.0 |
| Dried eggs | 1.0 |
| Salt | 0.5 |
| Limestone | 0.36 |
| Vitamins | 0.2 |
| Choline | 0.1 |
| Tocopherol | 0.05 |
| Trace Minerals | 0.05 |

| **Table 41** | |
|---|---|
| **Foods compared** | **Intake Ratio** |
| **Canine** | |
| 0.05% Alimet vs. control | 2.07:1 |
| 0.10% Alimet vs. control | 5.58:1 |
| 0.15% Alimet control | 5.13:1 |
| 0.10% DLM vs. control | 5.32:1 |
| 0.15% DLM vs. control | 4.95:1 |
| 0.10% Alimet vs. 0.05% Alimet | 2.54:1 |
| 0.15% Alimet vs. 0.05% Alimet | 1.99:1 |
| 0.15% Alimet vs. 0.10% Alimet | 2.54:1 |
| 0.15% DLM vs. 0.10% DLM | 1.57:1 |
| 0.10% DLM vs. 0.10% Alimet | 1.05:1 |
| 0.15% DLM vs. 0.15% Alimet | 2.5:1 |

| **Feline** | |
|---|---|
| 0.20% Alimet^{®} vs. control | 1.67:1 |
| 0.25% Alimet^{®} vs. control | 1.91:1 |
| 0.30% Alimet^{®} vs. control | 1.85:1 |
| 0.25% DLM vs. control | 1.87:1 |
| 0.30% DLM vs. control | 1.63:1 |
| 0.25% Alimet^{®} vs. 0.20% Alimet^{®} | 1.30:1 |
| 0.30% Alimet^{®} vs. 0.20% Alimet^{®} | 1.26:1 |
| 0.30% Alimet^{®} vs. 0.25% Alimet^{®} | 1.16:1 |
| 0.30% DLM vs. 0.25% DLM | 1.04:1 |
| 0.25% DLM vs. 0.25% Alimet^{®} | 1.24:1 |
| 0.30% DLM vs. 0.30% Alimet^{®} | 1.47:1 |

### Comparative EXAMPLE 24

Acceptance of food containing Alimet^{®} or DLM was studied to evaluate dietary consumption under no-choice conditions. Food was offered to the animals (18 dogs: 6 small, 6 medium, 6 large; 15 cats) for one week. The urine pH of six of the cats was also monitored.

The diets described in **Tables 39** and **40** above were used. Diets were supplemented with Alimet^{®} or DLM (0.1% for the canine study, 0.25% for the feline study). Additional urine pH tests were carried out with 0.3% Alimet^{®}.

Results of the urine pH experiments are given in **Tables 42** and **43.** Results of the acceptance text are given in **Table 44.**

| **Table 42** | | | |
|---|---|---|---|
| **Cat No.** | **Urine pH** | | |
| | **Control** | **Alimet 0.25%** | **DL Met 0.25%** |
| 452 | 6.35 | 6.45 | 6.39 |
| 453 | 6.44 | 6.2 | 6.38 |
| 457 | 6.29 | 6.56 | 6.39 |
| 460 | 6.25 | 6.03 | 6.36 |
| 465 | 6.22 | 6 | 6.1 |
| 475 | 6.56 | 6.44 | 6.36 |

| **Table 43** | | |
|---|---|---|
| **Cat No.** | **Urine pH** | |
| | **Control** | **Alimet^{®} 0.3%** |
| 450 | 6.20 | 6.03 |
| 453 | 6.44 | 6.10 |
| 465 | 6.04 | 5.53 |
| 468 | 6.40 | 5.73 |
| 469 | 6.68 | 6.31 |

| **Table 44** | | | |
|---|---|---|---|
| **Supplementation level** | | **Total grams consumed** | |
| | | **control** | **supplemented food** |
| **Canine** | | | |
| Alimet^{®} | 0.05% | 5,046 | 10,420 |
| | 0.1% | 2,101 | 11,714 |
| | 0.15% | 2,419 | 12,978 |
| DLM | 0.1% | 2,114 | 11,244 |
| | 0.15% | 2,734 | 13,542 |

| **Feline** | | | |
|---|---|---|---|
| Alimet^{®} | 0.2% | 1,111 | 1,853 |
| | 0.25% | 955 | 1,827 |
| | 0.3% | 1,003 | 1,858 |
| DLM | 0.25% | 985 | 1,842 |
| | 0.3% | 1,078 | 1,754 |

In view of the above, it will be seen that the several objects of the invention are achieved and other advantageous results attained.

As various changes could be made in the above feed rations and methods without departing from the scope of the invention, it is intended that all matter contained in the above description and shown in the accompanying drawing shall be interpreted as illustrative and not in a limiting sense.

When introducing elements of the present invention or the preferred embodiment(s) thereof, the articles "a," "an," "the," and "said" are intended to mean that there are one or more of the elements. The terms "comprising," "including," and "having" are intended to be inclusive and mean that there may be additional elements other than the listed elements.

Unless otherwise specified, amounts expressed as percentages are in percent by weight.

## Claims

1. An antimicrobial composition comprising 2-hydroxy-4-(methylthio)butanoic acid or a salt thereof and two other organic acids selected from butyric acid, lactic acid, formic acid and propionic acid

2. An antimicrobial composition according to claim 1 further comprising an acidulent selected from the group consisting of phosphoric acid, sulfuric acid, phosphorus acid, hydrochloric acid, hydrobromic acid and nitric acid.

3. An antimicrobial composition according to claim 1 further comprising at least one additional organic acid selected from the group consisting of acetic acid, benzoic acid, malic acid, tartaric acid, mandelic acid, citric acid, fumaric acid, sorbic acid, boric acid, succinic acid, adipic acid, glycolic acid and glutaric acid.

4. An antimicrobial composition according to claim 1 comprising 2-hydroxy-4-(methylthio)butanoic acid, butyric acid, and lactic acid.

5. An antimicrobial composition according to claim 3 comprising 2-hydroxy-4-(methylthio)butanoic acid, butyric acid, formic acid, and lactic acid.

6. An antimicrobial composition according to claim 3 comprising 2-hydroxy-4-(methylthio)butanoic acid, phosphoric acid, butyric acid, lactic acid, and propionic acid.

7. An antimicrobial composition according to claim 3 comprising 2-hydroxy-4-(methylthio)butanoic acid; phosphoric acid, butyric acid, formic acid, and propionic acid.

8. A process for preparing an antibacterial composition according to claim 1 comprising blending 2-hydroxy-4-(methylthio)butanoic acid with two other organic acids selected from butyric acid, lactic acid, formic acid and propionic acid

9. Use of an antibacterial composition according to any one of claims 1 to 7 for inhibiting or killing *Salmonella* in food.

10. Use according to claim 9 wherein the food is selected from the group consisting of human food, livestock food, pet food, or aquaculture food.

11. Use according to claim 9 or claim 10 wherein the antimicrobial composition is mixed with the food as it is formulated.

12. Use according to any one of claims 9 to 11 wherein the food is fed to an animal selected from the group consisting of dairy cows , lactating dairy cows , dairy calves, beef cattle, sheep, goats, fish, crustaceans, horses, chickens, turkeys, dogs, and cats.

13. Use according to claim 12 wherein the food is fed to a ruminant animal.

## Patentansprüche

1. Antimikrobielle Zusammensetzung, umfassend 2-Hydroxy-4-(methylthio)-butansäure oder ein Salz davon und zwei andere organische Säuren ausgewählt aus Buttersäure, Milchsäure, Ameisensäure und Propionsäure.

2. Antimikrobielle Zusammensetzung nach Anspruch 1, ferner umfassend ein Säuerungsmittel ausgewählt aus der Gruppe bestehend aus Phosphorsäure, Schwefelsäure, phosphorige Säure, Salzsäure, Bromwasserstoffsäure und Salpetersäure.

3. Antimikrobielle Zusammensetzung nach Anspruch 1, ferner umfassend mindestens eine zusätzliche organische Säure ausgewählt aus der Gruppe bestehend aus Essigsäure, Benzoesäure, Äpfelsäure, Weinsäure, Mandelsäure, Citronensäure, Fumarsäure, Sorbinsäure, Borsäure, Bernsteinsäure, Adipinsäure, Glycolsäure und Glutarsäure.

4. Antimikrobielle Zusammensetzung nach Anspruch 1, umfassend 2-Hydroxy-4-(methylthio)butansäure, Buttersäure und Milchsäure.

5. Antimikrobielle Zusammensetzung nach Anspruch 3, umfassend 2-Hydroxy-4-(methylthio)butansäure, Buttersäure, Ameisensäure und Milchsäure.

6. Antimikrobielle Zusammensetzung nach Anspruch 3, umfassend 2-Hydroxy-4-(methylthio)butansäure, Phosphorsäure, Buttersäure, Milchsäure und Propionsäure.

7. Antimikrobielle Zusammensetzung nach Anspruch 3, umfassend 2-Hydroxy-4-(methylthio)butansäure, Phosphorsäure, Buttersäure, Ameisensäure und Propionsäure.

8. Verfahren zur Herstellung einer antimikrobiellen Zusammensetzung nach Anspruch 1, umfassend das Mischen von 2-Hydroxy-4-(methylthio)butansäure mit zwei anderen organischen Säuren ausgewählt aus Buttersäure, Milchsäure, Ameisensäure und Propionsäure.

9. Verwendung einer antimikrobiellen Zusammensetzung nach irgendeinem der Ansprüche 1 bis 7 zur Inhibierung oder Abtötung von Salmonella in einem Nahrungsmittel.

10. Verwendung nach Anspruch 9, wobei das Nahrungsmittel ausgewählt ist aus der Gruppe bestehend aus Nahrungsmittel für Menschen, Viehfutter, Haustierfutter oder Fischfutter.

11. Verwendung nach Anspruch 9 oder Anspruch 10, wobei die antimikrobielle Zusammensetzung mit dem Nahrungsmittel, wie es formuliert ist, gemischt wird.

12. Verwendung nach irgendeinem der Ansprüche 9 bis 11, wobei mit dem Nahrungsmittel ein Tier ausgewählt aus der Gruppe bestehend aus Milchkühen, laktierenden Milchkühen, Milchkälbern, Fleischvieh, Schafen, Ziegen, Fischen, Krustentieren, Pferden, Hühnern, Truthähnen, Hunden und Katzen gefüttert wird.

13. Verwendung nach Anspruch 12, wobei das Nahrungsmittel einem Wiederkäuer verfüttert wird.

## Revendications

1. Composition antimicrobienne comprenant un acide 2-hydroxy-4-(méthylthio)butanoïque ou l'un de ses sels et deux autres acides organiques sélectionnés parmi l'acide butyrique, l'acide lactique, l'acide formique et l'acide propionique.

2. Composition antimicrobienne selon la revendication 1 comprenant en outre un acidulant sélectionné du groupe constitué d'acide phosphorique, d'acide sulfurique, d'acide phosphoreux, d'acide chlorhydrique, d'acide bromhydrique et d'acide nitrique.

3. Composition antimicrobienne selon la revendication 1 comprenant en outre au moins un acide organique supplémentaire sélectionné du groupe constitué de l'acide acétique, l'acide benzoïque, l'acide malique, l'acide tartrique, l'acide mandélique, l'acide citrique, l'acide fumarique, l'acide sorbique, l'acide borique, l'acide succinique, l'acide adipique, d'acide glycolique et l'acide glutarique.

4. Composition antimicrobienne selon la revendication 1 comprenant un acide 2-hydroxy-4-(méthylthio)butanoïque, un acide butyrique, et un acide lactique.

5. Composition antimicrobienne selon la revendication 3 comprenant un acide 2-hydroxy-4-(méthylthio)butanoïque, un acide butyrique, un acide formique et un acide lactique.

6. Composition antimicrobienne selon la revendication 3 comprenant un acide 2-hydroxy-4-(méthylthio)butanoïque, un acide phosphorique, un acide butyrique, un acide lactique et un acide propionique.

7. Composition antimicrobienne selon la revendication 3 comprenant un acide 2-hydroxy-4-(méthylthio)butanoïque, un acide phosphorique, un acide butyrique, un acide formique et un acide propionique.

8. Processus de préparation d'une composition antibactérienne selon la revendication 1 comprenant le mélange d'un acide 2-hydroxy-4-(méthylthio)butanoïque avec deux autres acides organiques sélectionnés de l'acide butyrique, l'acide lactique, l'acide formique et l'acide propionique.

9. Utilisation d'une composition antibactérienne selon l'une quelconque des revendications 1 à 7 pour inhiber ou éliminer les salmonelles dans un aliment.

10. Utilisation selon la revendication 9, dans laquelle l'aliment est sélectionné du groupe constitué d'aliment pour humains, d'aliment pour bétail, d'aliment pour animaux de compagnie, ou d'aliment pour l'aquaculture.

11. Utilisation selon la revendication 9 ou 10, dans laquelle la composition antimicrobienne est mélangée avec l'aliment pendant sa formulation.

12. Utilisation selon l'une quelconque des revendications 9 à 11 dans laquelle un animal, choisi parmi le groupe constitué de vaches laitières, de vaches laitières allaitantes, de veaux de troupeaux laitiers, de bovins de boucherie, de moutons, de chèvres, de poisson, de crustacés, de chevaux, de poulets, de dindes, de chiens et de chats, est nourri avec l'aliment.

13. Utilisation selon la revendication 12, dans laquelle un ruminant est nourri avec l'aliment.
